# EUROPEAN PATENT APPLICATION

(11) **EP 1 646 218 A1**
(43) Date of publication of application: **12.04.2006**
(21) Application number: 03741357.2
(22) Date of filing: 11.07.2003
(51) Int. Cl.: H04N 1/00, H04N 1/32, G06K 9/00, G06T 1/00, G06T 7/00

(54) **NEXT-GENERATION FACSIMILE MACHINE OF INTERNET TERMINAL TYPE**

(71) Applicant: Takida, Yoshiaki, Nagoya-shi, Aichi 463-0051 (JP)
(72) Inventor: Takida, Yoshiaki, Nagoya-shi, Aichi 463-0051 (JP)
(74) Representative: Vetter, Hans
(86) International application number: PCT/JP2003/008846
(87) International publication number: WO 2005/006732

(57) **Abstract**

A desktop image scanning/reading transmission/reception printer (30) and a floor-installation image scanning/reading transmission/reception printer (40) have an image scanning/reading function using an optical sensor (CCD) and a printing function or an Internet terminal function and are connected to a router, which is an Internet terminal, installed in an office or a home so as to enable data communication through a cable or by wireless. The image scanning/reading transmission/reception printer transmits/receives a read image file created by scanning/reading a document or a printed object by means of an optical sensor to the transmission destination indicated by the facsimile address newly set as transmission destination data or to the IP phone number of the destination Internet terminal over the Internet through a facsimile server which is a newly installed facsimile file transmission/reception server.

## Description

Technical Field

The present invention relates to an apparatus in which an image scanner/reader having an image scanning/reading function is connected to an Internet terminal device so as to enable data communication through a cable or by wireless, or a floor-installation image scanning/reading transmitter/receiver in which a main body of an image scanner/reader is provided with an Internet terminal function. Image data generated by scanning/reading a printed document is stored/saved as an image file on an external storage device of the Internet terminal device. The image file can be transmitted/received over the Internet by using a communication function of the Internet terminal. A file transmission/reception method is presented, in which the image file is transmitted/received via a file server which is a newly equipped file transmission/reception server, by setting a file address, newly provided as destination data in transmission, to a transmission destination. Or, in the case of facsimile transmission in which a printing process is performed upon reception of the image file, a facsimile file transmission/reception method is presented, in which the image file is transmitted/received via a facsimile server which is a newly installed facsimile file transmission/reception server, by setting a facsimile address newly provided as the destination data to the transmission destination. Or, an image scanning/reading transmitter/receiver having an Internet terminal function, and a file transmission/reception method over the Internet or a file transmission/reception system, are presented, in which a scanned/read file can be transmitted/received by setting an IP telephone number, which is associated with a fixed IP address of the Internet terminal as the destination data in transmission, to the transmission destination data.

Background Art

There are several methods for generating image data using an optical sensor (CCD: charge-coupled device). The following methods have been well known with respect to a CCD camera or an image scanner: e.g., image data created by image capturing with a CCD camera is stored/saved as a computer-processable image file; or image data created by image scanning/reading with an optical sensor is stored/saved as an image file. Other than the above, there have been conventionally known methods of transmitting/receiving image data: e.g., an image encoded through scanning/reading an image by a facsimile machine is electronically transmitted; image data created by image capturing with an optical camera included in a portable telephone of a portable telephone company is transmitted/received as an image file; and a file is transmitted/received by FTP as a file transmission/reception method over the Internet, or, in the case of a relatively small-sized file, the file is transmitted/received as an attachment to Internet mail.

Disclosure of Invention

In the present invention, image data generated by an image scanner/reader having an optical sensor (CCD: charge-coupled device) for image scanning/reading is transmitted to an Internet terminal device so as to enable data communication through a cable or by wireless. In the Internet terminal device which has received the image data, the image data generated by scanning/reading a printed document is stored/saved in image file format on an external storage device of the Internet terminal device, such as a memory card storage device, a fixed disk storage device, and a removable RAM disk device.

The image file generated by image scanning/reading with the image scanner/reader or the file stored/saved on the external storage device of the Internet terminal device is transmitted/received via a file server which is a file transmission/reception server newly equipped as a transmission/reception method over the Internet. The file transmission/reception method is provided, in which the file is transmitted/received by setting a file address, newly provided as destination data in transmission/reception, to the destination data.

In conventional transmission/reception in which the Internet terminal device operating as a recipient in transmission/reception is powered at all times waiting for reception and provided with a printing function, the facsimile file transmission/reception method is provided, in which a facsimile file is transmitted/received via a facsimile server which is a newly installed facsimile transmission/reception server, by setting a facsimile address, newly provided as transmission destination data, to the destination data.

The file transmission/reception method over the Internet can be a development/improvement of a transmission/reception method of the Internet mail or FTP file transfer method, which may be newly established as a file transmission/reception method. Alternatively, a suitable protocol may be newly designed for the file or facsimile file transmission/reception method in which the file is transmitted/received via a newly installed file server or facsimile server.

The method is different from a conventional method in which an image scanned/read by a facsimile machine is encoded and electronically transmitted. The present invention can be considered as a next-generation facsimile machine and facsimile transmission/reception method or facsimile transmission/reception system. If a facsimile file which is an image file is transmitted/received in conventional facsimile transmission/reception, the next-generation facsimile machine and facsimile file transmission/reception method or facsimile file transmission/reception system are provided in which the image file created by image scanning/reading with the image scanner/reader is transmitted/received via a facsimile server which is a newly installed facsimile transmission/reception server, by setting a facsimile address, newly provided as destination data in transmission/reception, to the transmission destination data.

The Internet terminal device to which the image scanner/reader is connected includes a portable telephone and a desktop telephone of Internet terminal type, which are connected to the Internet via a telephone network, or a portable computer and a desktop computer, which are connected to the Internet through an Internet provider.

The image scanner/reader is provided with an image scanning/reading unit which scans/reads a note, an illustration, a photo, or a printed document by an optical sensor. The image scanner/reader transmits the image data generated by image scanning/reading to the Internet terminal device to store the data on the external storage device in image file format. The image file or other files stored/saved on the external storage device can be transmitted/received over the Internet through a communication process at a communication function portion of the Internet terminal. The image scanning/reading transmitter/receiver is provided, which is used by connecting a device having an image scanning/reading function to an Internet terminal device, or the image file transmission/reception method or image file transmission/reception system is provided in the form of an Internet terminal device as an image scanning/reading transmitter/receiver having an image scanning/reading function and an Internet terminal function. The image file is provided with image file size information and image data reading time information, in addition to image data.

Plural number of image scanners/readers are provided which have different casing shapes according to the purpose of use: e.g., a portable image scanner/reader for reading a manuscript in the size of a notepad, a portable document reader having a casing to be fitted into a business bag for reading a manuscript up to the size of A4 paper and a desktop image scanning/reading transmission/reception printer having a casing shape of a conventional desktop facsimile machine, and a flatbed reader suitable for reading books or bound documents, and a floor-installation image scanning/reading transmission/reception printer having a casing shape of a floor-installation copy machine conventionally provided in an office.

A message conventionally transmitted/received by Internet mail is in text format generally created by keyboard input. A recipient of the mail is unable to confirm whether a writer of the received mail is certainly the person indicated as a sender only from the transmitted mail information. However, if the message is image data created by reading a note, etc. with an image scanner/reader and transmitted as an image file, personal authentication of the writer is possible by the writing.

Since the writing allows individual recognition, a security method can be considered which uses an image scanner/reader and includes a personal authentication unit which verifies the writing. For example, when logging onto an off-line or on-line system, a user transmits to the system an image file created by reading a notepad having a signature thereon with an image scanner/reader. In the system which receives the signature image file, personal authentication of the person who accesses the net is enabled based on the signature writing data which has been registered at the time of making a contract.

Such personal authentication method and security method are considered new, different from conventional personal authentication method and security method which require a "user ID" and a "password" at system logon. Since the writing image data is left at the hand of the recipient and inhibiting effects such as exercise of self-control can be expected, the method can be applied to a system which requires reliability and high-level security or to a case in which undesirable use of the net should be prevented.

Various image file formats such as JPG file format, BMP file format, etc., can be utilized when an image is read and stored/saved as image data. A file format used when the image file is stored can be selected from a set of file formats when the image data created by scanning/reading an image is stored, or, a file format for storing image data created by scanning/reading an image can be set in advance in a basic operation menu of the Internet terminal device.

It is preferable that PDF file format, which is a file format for a document of a U.S. company, Adobe Systems Incorporated, can be an option for the image file format, in addition to some generally used image file formats. In case that there are a plural number of manuscripts to be read or even if there is only one page of manuscript, it is preferable that a file format used for exchange on the net through transmission/reception is the file format such as the PDF file format which allows the image data to be stored/saved when an image data is converted to a file, as paper documents are not exchanged as it is but bounded in a file folder or enclosed in a flat bag. Even considering the case when the PDF file data such as a character and an illustration, a photo, a printed document is scaled and scrolled in a display portion of the Internet terminal device, the PDF file format is provided with a function of collecting image files having several pages into a cohesive file and is superior in operability. Therefore, storage of image data by the PDF file format at a lossless compression rate is desirable. The PDF file format is considered the best, but any file format will do as long as the file format is provided with a function of collecting the image data into a cohesive file and is superior in operability concerning scaling and scrolling.

The image scanner/reader is connected to the Internet terminal device like a storage medium device such as an external disk drive connected to a computer. The image data generated by scanning/reading an image is stored/saved as an image file on a fixed disk storage device and a removable ROM disk device or a memory card storage device, which is an external storage device of the Internet terminal device. It is preferable that the external storage device is a memory card storage device or a removable ROM disk device, which can be detached from the Internet terminal device, so that the files stored/saved on the external storage device can be easily replaced to a computer.

As the floor-installation image scanning/reading transmission/reception printer is generally installed in an office, it is possible that the files stored/saved on the external storage device are mixed up. Therefore, a security function is necessary for the files on the fixed disk device. For example, folders as much as the number of clerks in the office are created on the fixed disk, and access to each folder is not permitted unless a password set by the owner of the folder is submitted. Also, the files on the fixed disk can be moved and copied to the memory card storage device, or can be deleted. Security of the files on the fixed disk can be achieved by restricting the access by setting separate passwords for general users and an administrator as is the case with a computer. A security function for preventing access to the files on the fixed disk from the Internet is also provided. By providing a removable disk drive, other than the fixed disk, as the external storage device, the document image file generated by scanning/reading a document paper directly or the files on the fixed disk device can be stored/saved on removable disk media, such as CD-ROM, CD-RAM, DVD-ROM, DVD-RAM, or next-generation removable disk media.

Reading transmission actuating operation of an image scanning/reading operating portion is executed from the start of image reading till the completion of image file transmission on the Internet terminal device connected to a reader. It is preferable that an IP telephone number, other than a file address or a facsimile address, can be set as transmission destination data, using character/number input keys in each transmission, since numeric data makes destination data setting easy. An address book function which allows storage of personal information is provided in the basic operation menu of the image scanner/reader. Also, a destination data storage unit is provided in the basic operation menu. The destination data storage unit can allocate destination data information to respective destination data storage button switches provided with the image scanner/reader.

By setting the file address and the facsimile address or the IP telephone number, which are file transmission destination data, to transmission destination data, and performing transmission operation, the image data generated by scanning/reading an image is transmitted to the Internet terminal device. As a result of a transmission process at a communication function unit of the Internet terminal device, the image file is transmitted via a file server or a facsimile server in image file format.

For the transmission operation, a manuscript is set at a reading portion of the reader, and the transmission destination file address or facsimile address or IP telephone number, which is the destination data stored in advance, is read from a destination data functioning portion, using the destination data storage button switches or the address book, to set the destination data. Then, a transmission button switch is depressed. Since the transmission operation is simple as above, a user who is not used to operation of communication apparatus or who has avoided using the Internet mail till now due to difficulty of operation, or even a child can transmit/receive a handwritten message and illustration, or a printed document to a portable Internet terminal device and a desktop Internet terminal device or computer, in transmission operation which is as simple as the conventional facsimile transmission. Moreover, unlike the case of the conventional facsimile, destination of the transmission is not limited to a facsimile machine which is a specialized machine for transmission/reception, but the destination can be an Internet terminal device.

The image data can be displayed if an image data display portion is provided in a small-sized portable Internet terminal device. The image data display portion is provided with a scaling display function for scaling up and down the displayed image data and a scrolling display function for scrolling the displayed image data in vertical and lateral directions.

For the file transmission/reception method in the Internet terminal device over the Internet, software for mail transmission/reception is started at the time of the conventional Internet mail transmission/reception. The file transmission/reception method is provided, in which software for file transmission/reception which is newly produced and set up for file transmission/reception is started, a new file transmission process is selected and a file address is set to a destination data field, and the file is transmitted via a file server which is a file transmission/reception server. In the case of facsimile transmission/reception, the facsimile file transmission/reception method is provided, in which a facsimile address is set to the destination data field, and the file is transmitted/received via a facsimile server which is a facsimile file transmission/reception server.

In the file transmission/reception, a file address is set as the destination data and the file is transmitted/received via the file server. However, the destination Internet terminal device, such as a desktop computer disposed on a desk in an office, may not be always powered on. If communication infrastructure with a sufficient communication speed is realized, and if storage capacity of an external storage device of the Internet terminal device becomes so large as that there is no worry for the free space, then there is no problem in a reception style in which all the files to be sent are received. Till then, a file reception message indicating that a file has been transmitted to the recipient, and file name or file size information, are sent from the file server, and the recipient checks the disk free space of the recipient device, and downloads the file selected among the received files on the file server.

On the other hand, in the facsimile file transmission/reception via a facsimile server in which a facsimile address is set as the transmission destination data, operation from the start of scanning/reading of an image to transmission of a facsimile file to the recipient to be printed is included in the transmission/reception operation of a conventional facsimile machine. The facsimile file, which is an image file transmitted to the facsimile server from the image scanning/reading transmission/reception printer, is sent to a desktop Internet terminal device, which has a casing as large as a casing of a conventional desktop facsimile machine waiting for reception at all times, or a floor-installation Internet terminal device, which has a casing as large as a casing of a floor-installation copier conventionally provided in an office. A facsimile reception mode is provided, in which the facsimile file transmitted is directly sent to the recipient to be printed by a print function of the desktop Internet terminal device or the floor-installation Internet terminal device.

The recipient desktop Internet terminal device or floor-installation Internet terminal device executes a printing process at the time of reception of the facsimile file. When the receiving operation is normally completed, a normal reception complete message is returned to the sender of the facsimile file. If the reception from the facsimile server to the recipient cannot be performed due to trouble in facsimile file transmission, retransmission is attempted for predetermined times and then, if failed, an undeliverable message is returned to the sender.

Both the file server and the facsimile server are designed to comprise a security function having a level required for the Internet. The file or facsimile file transmission/reception method should be imaged as a so-called peer-to-peer method. The file server and the facsimile server either "immediately transmits the file to the recipient" or, "after attempting retransmission for a predetermined times, returns or deletes the file". It is preferable to have a design policy in which files and facsimile files should be left on the file server for only the minimum necessary period of time.

Brief Description of Drawings

FIG. 1 shows a portable image scanner/reader and specific examples of portable Internet terminal devices mainly concerned in the present invention.

FIG. 2 shows an example of a portable image scanner/reader.

FIG. 3 shows a desktop image scanning/reading transmission/reception printer and specific examples of desktop Internet terminal devices mainly concerned in the present invention.

FIG. 4(a) shows an example of a desktop image scanning/reading transmission/reception printer. The desktop image scanning/reading transmission/reception printer is expected to be a next-generation facsimile machine that replaces conventional facsimile machines. FIG. 4(b) shows a floor-installation image scanning/reading transmission/reception printer that is expected to be installed in an office.

FIG. 5(a) shows an example of a portable document reader that is a portable image scanner/reader accepting the size of documents to be read up to about A4 size, and FIG. 5(b) shows a specific application of the image scanner/reader, i.e. a ballot image scanner/reader that implements a next-generation election method.

FIG. 6 shows s view illustrating a telephone-shaped computer that is an Internet terminal device having a telephone-shaped casing.

FIG. 7 shows views illustrating a flatbed scanner that is a new type of image scanner/reader provided with the function of a conventional flatbed scanner.

FIG. 8 shows a router, a gateway and several servers installed in an office, for Internet connection.

FIG. 9 is a block diagram illustrating an image scanner/reader.

FIG. 10 is a block diagram illustrating an Internet terminal device.

FIG. 11 is a flowchart to illustrate an operation when image reading actuating operation is performed at an operating portion of the Internet terminal device.

FIG. 12 is a flowchart to illustrate an operation when a file stored on an external storage of the Internet terminal device is transmitted.

FIG. 13 is a flowchart to illustrate an operation from scanning/reading an image to completion of transmission of a read image file in the Internet terminal device, which is the operation performed by the operating portion of the image scanner/reader.

FIG. 14 is a flowchart to illustrate an image file format conversion process for converting the file format of an image file stored/saved on the external storage of the Internet terminal device.

FIG. 15 is a flowchart to illustrate a personal authentication method through the writing in the form of signature image data, using an image scanner/reader.

FIG. 16 is a flowchart to illustrate a personal authentication method on a network by means of eye iris image data, using an apparatus equipped with a CCD camera.

Best Mode for Carrying Out the Invention

Image scanners/readers include portable image scanners/readers, desktop image scanning/reading transmission/reception printers, floor-installation image scanning/reading transmission/reception printers, portable document readers, flatbed readers and ballot image scanners/readers.

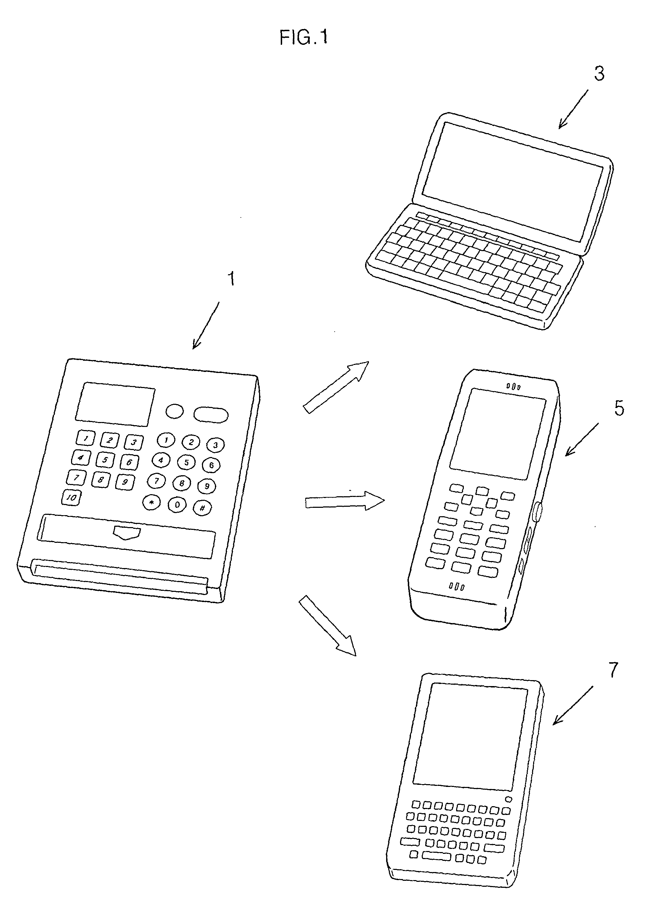

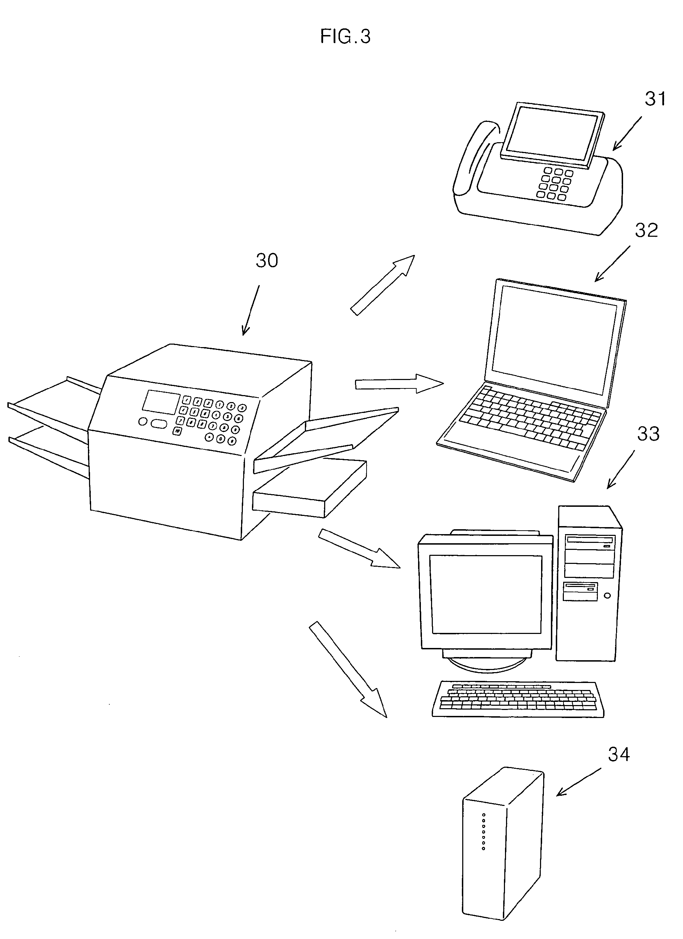

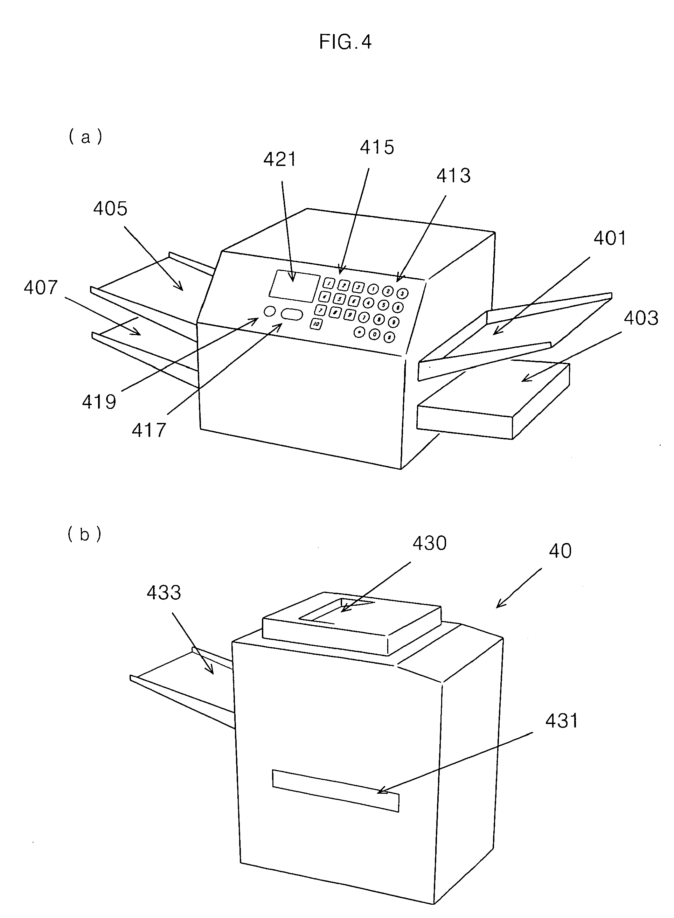

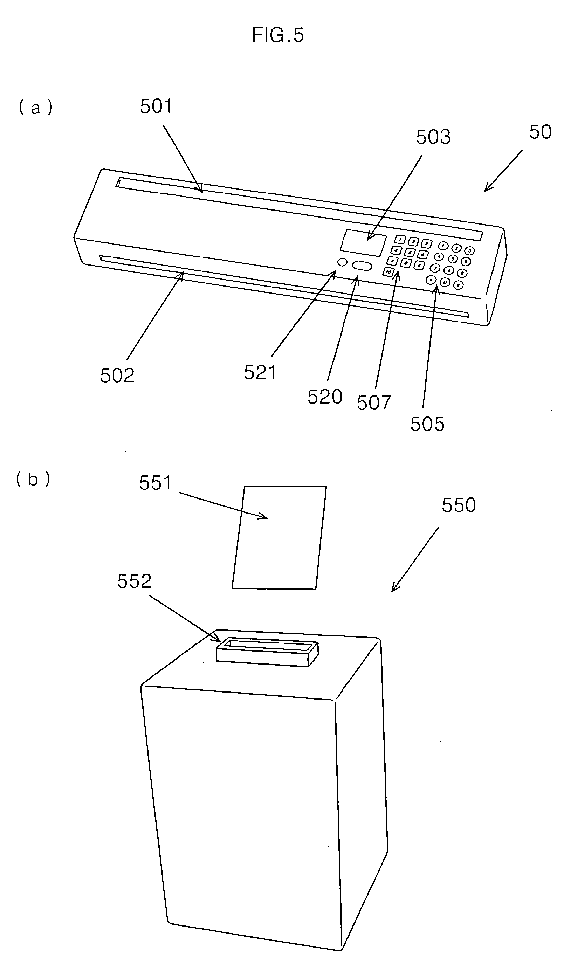

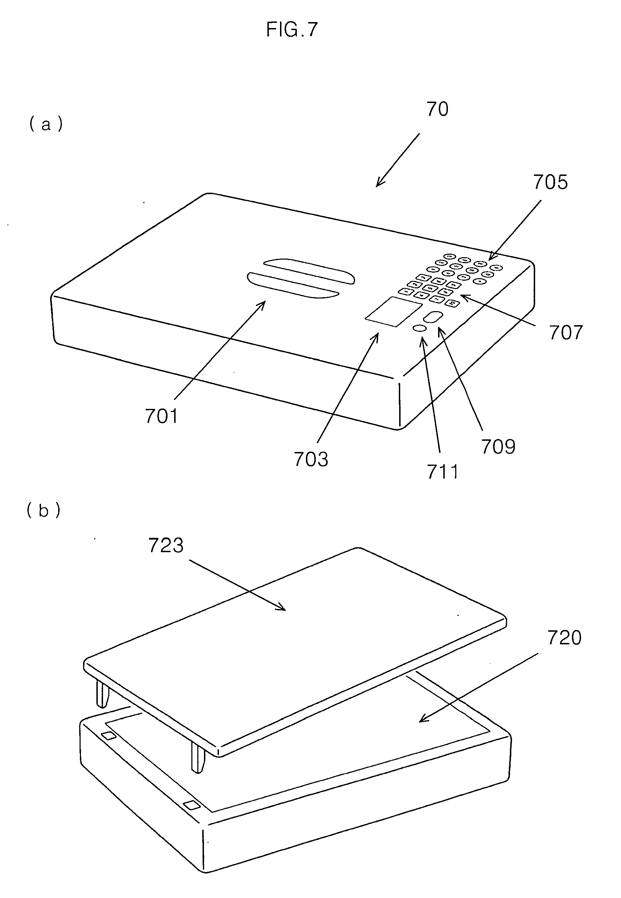

FIG. 1 shows a portable computer 3, a telephone-shaped computer 5 and a PDA 7 as examples of portable Internet terminal devices. A portable image scanner/reader 1 is also shown with a small casing in relation to the portable Internet terminal devices. FIG. 3 shows the Internet terminal device of desktop type. A desktop image scanning/reading transmission/reception printer 30 has a desktop casing in relation to desktop Internet terminal devices, such as a desktop telephone set 31 with the Internet terminal function, a notebook computer 32, a desktop computer 33, and a router 34 which is an Internet terminal device. The desktop image scanning/reading transmission/reception printer 30 is provided with the printing function and the Internet terminal function. FIG. 4(b) shows a floor-installation image scanning/reading transmission/reception printer 40 having a casing of a floor-type copier conventionally installed in an office. The floor-installation image scanning/reading transmission/reception printer 40 is an Internet terminal device with a copying function, a faxing function, a printing function and so on. FIG. 5(a) shows a portable document reader 50 that accepts up to A4 size paper with a portable casing. FIG. 7 shows a flatbed reader 70 that is an image scanner/reader suitable for reading books, bound documents, or documents with the size larger than A4.

Internet terminal devices connected to the image scanners/readers are connected to a telephone network, such as the desktop telephone set 31, provided with an Internet terminal function, of a telephone company and a mobile telephone of a mobile telephone company. Or, the Internet terminal devices are the computers 32 and 33, which are connected to the Internet through Internet providers.

Each of the aforesaid Internet terminal devices are connected to each of the aforementioned image scanners/readers so as to permit data communication, such as by cable connection. Operation from the start of scanning/reading an image until the completion of transmission of the read image file through the Internet in the Internet terminal devices can be performed by the operation of an operating portion provided to bodies of the image scanners/readers. Image reading actuating operation and file transmission actuating operation can be performed also by an operating portion provided to the Internet terminal devices. By the actuating operation of the operating portion of the Internet terminal device, image data created by scanning/reading an image performed by the image scanner/reader is stored/saved on an external storage of the Internet terminal device as an image file, and the image file stored/saved on the external storage is transmitted through the Internet according to a file address or a facsimile address newly set as destination data in file transmission. The file address or facsimile address is a destination address for specifying the destination of transmission, which is set as destination data at the time of file or a facsimile file transmission/reception, as in the conventional Internet mail which is transmitted/received by setting a mail address as the destination data.

The image scanner/reader is connected to the Internet terminal device through a cable or by wireless so as to permit data communication. The connection may be made either by a wire method or by a wireless method as long as a practical data communication speed can be achieved. It is preferable that the Internet terminal device automatically recognizes the image scanner/reader as an image scanning/reading device, when a main power switch is turned on while the image scanner/reader and the Internet terminal device are interconnected.

FIG. 1 shows potable Internet terminal devices used as Internet terminal devices when reading is performed by a portable image scanner/reader 1 with a small casing. The potable Internet terminal devices here are a portable computer 3, a telephone-shaped computer 5, and a PDA 7. The portable image scanner/reader 1 and the respective potable Internet terminal devices 3, 5, and 7 are connected by a cable data communication system or by a wireless data communication system which allows data communication.

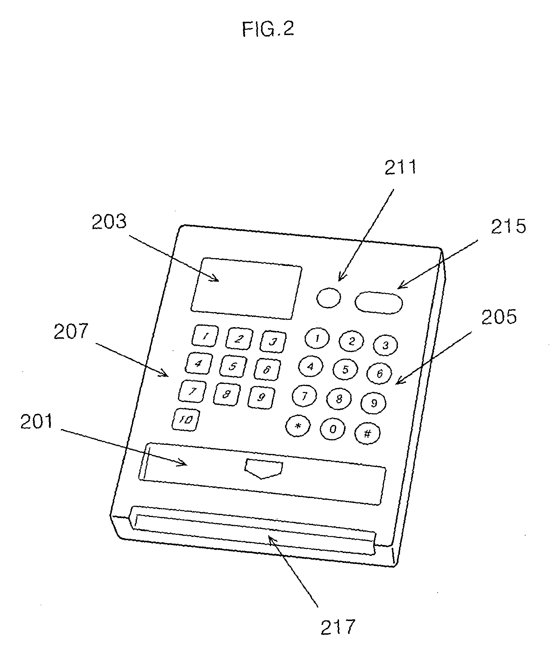

FIG. 2 is an outline view showing an example of the portable image scanner/reader 1. The portable image scanner/reader 1 comprises: character/number input keys 205 that is used to submit destination data; destination data storing button switches 207 with a function of previously setting and storing the destination data by the operation of the character/number input keys 205; a scanner display 203 that displays operation information of the portable image scanner/reader 1; a reading resolution setting button switch 211 that is used to set an image reading resolution; a manuscript setting portion 201 that is used to set a manuscript to be read; a manuscript discharge portion 217 that discharges the read manuscript; and a transmission button switch 215 operated at the time of transmission.

FIG. 3 shows a desktop image scanning/reading transmission/reception printer 30 and desktop Internet terminal devices which correspond to Internet terminal devices. A desktop telephone set 31 having an Internet terminal function, a notebook computer 32, a desktop computer 33, and a router 34 are shown as examples of the desktop Internet terminal devices.

FIG 4(a) shows the desktop image scanning/reading transmission/reception printer 30 having a desktop casing designed to be placed on a desk or the like. In the desktop image scanning/reading transmission/reception printer 30, as in the same manner as in the portable image scanner/reader 1, destination data is submitted through the operation of character/number input keys 413 in each transmission. Submission of destination data may be performed by entering alphabets, numbers, Chinese characters, and hiragana using the character/number input keys 413 in the same manner as in the case of a mobile phone. However, transmission destination data is not always numeric data as is the case with telephones and conventional facsimile machines. Therefore, until an Internet terminal device is assigned an IP telephone number as a fixed IP address and becomes capable of transmission/reception using the IP telephone number as transmission destination data when performing transmission to most destinations, it is preferable to provide, if possible, a small keyboard to the main body of the image scanner/reader, considering the size of the casing, in a similar fashion to the PDA 7 with a small casing. Also provided are destination data storage button switches 415 that store transmission destination data, a reader display 421 that displays operation information of the desktop image scanning/reading transmission/reception printer 30, a reading resolution setting button switch 419, a manuscript setting portion 401 that is used to set a manuscript to be read, a manuscript discharge portion 405 that discharges the read manuscript, and a transmission button switch 417 operated at the time of transmission. When a facsimile file that is an image file transmitted via the Internet is received, the desktop image scanning/reading transmission/reception printer 30 having a printing function performs printing at the same time with the reception of the file, in the same manner as in a conventional facsimile reception operation. The desktop image scanning/reading transmission/reception printer 30 is further provided with a printing paper setting portion 403 that is used to set printing paper thereon for the printing and a printing paper discharge portion 407 that discharges printed paper on which printing has been performed in accordance with the received facsimile file. By using an AC power unit as a power section, a reception waiting state, in which power is constantly supplied in order to receive facsimile, is maintained.

The desktop telephone 31, etc. capable of Internet connection are connected to the desktop image scanning/reading transmission/reception printer 30, or the desktop image scanning/reading transmission/reception printer 30 is directly connected to the router 34. Then, a reader operating portion provided to the desktop image scanning/reading transmission/reception printer 30 can perform the actuation operation from the start of scanning/reading an image until the completion of transmission of the read image file by the Internet terminal function portion. The transmission destination data may be inputted by: the character/number input keys 413 in each transmission; starting an address book in a basic operation menu of the desktop image scanning/reading transmission/reception printer 30 and selecting the previously stored address information of a transmission target; or, after reading the destination data previously stored and assigned to each of the destination data storage button switches 415 by means of the operation of the destination data storage button switches 415 and inputting the transmission destination data, depressing the transmission button switch 417. The above simple reading and transmission operation allows transmission and reception to and from the Internet terminal devices such as the portable Internet terminal devices 3, 5, and 7, the computers 32 and 33, or the desktop image scanning/reading transmission/reception printer 30, via the Internet by means of a communication function of the desktop telephone set 31 having the Internet connection function, and of the router 34 as an Internet terminal device. The scanned/read image file to be transmitted may be exemplarily described as an image file with the same quality as image data created by scanning/reading an image with a current flatbed scanner. Conventionally, a facsimile machine is installed in an office as a terminal device only for document transmission/reception. Facsimile transmission is performed by entering a unique facsimile number of a transmission destination facsimile machine as the destination data. The transmission destination when transmitting an image file by using an image scanning/reading transmitter/receiver is an Internet terminal device capable of Internet connection. In the case of transmission to the desktop computer 33 disposed on a desk in an office as the transmission destination, it is possible to receive a facsimile file at the desktop computer 33 as a receiving Internet terminal device. It is no longer necessary to leave a desk to fetch received documents from the facsimile machine as the terminal only for document transmission/reception. It is possible to receive documents by the computer on the desk. Furthermore, unlike received documents by conventional facsimile transmission/reception, a received facsimile is an image file having a good quality, being usable on a computer, and having a good recording stability. Unlike an arrival message printed as a document upon arrival, data to be received arrives and is stored/saved in the form of an image file, i.e., a facsimile file. Printing of the image data in the received image file may be performed after the reception, when necessary, by a printer connected to the computer. Alternatively, printing may be performed, when necessary, by moving the received image file from the external storage of the Internet terminal device, in which the received image file is stored/saved, by using a memory card, etc. FIG. 4(b) shows a floor-type image scanner/reader installed in an office, which is the floor-installation image scanning/reading transmission/reception printer 40 with a printing function and an Internet terminal function.

While FIG. 4(a) illustrates the desktop image scanning/reading transmission/reception printer 30 in the form of a conventional dedicated desktop facsimile machine, FIG. 4(b) illustrates the floor-installation image scanning/reading transmission/reception printer 40 with a casing of a floor-type copier conventionally installed in an office. The floor-installation image scanning/reading transmission/reception printer 40 is provided with functions, such as an image scanning function, a printing function, a copying function, and an Internet terminal function. An image file obtained by scanning/reading a printed document is stored/saved on a fixed disk as an external storage. Also, the image file can be transmitted/received via the Internet. At the time of image file transmission, setting of a transmission mode and setting of a reception mode, i.e., setting of receiving operation at the transmission destination at the time of reception, may be performed. While a received facsimile file is stored/saved on a fixed disk as an external storage at the time of reception by the floor-installation image scanning/reading transmission/reception printer 40, printing is not performed if the transmission is performed with the setting of a reception mode in which printing is not to be performed. That is, a facsimile file transmission/reception system with transmission/reception mode setting function is presented. In contrast to a conventional facsimile transmission/reception method employed in an office or a home in which documents are electronically transmitted via a telephone network, there are provided an image scanning/reading transmission/reception printer as a facsimile machine that creates image files by reading with an image scanner/reader and transmits/receives the image files via the Internet, and a next-generation facsimile transmission/reception method or facsimile transmission/reception system.

The floor-installation image scanning/reading transmission/reception printer 40 shown in FIG. 4(b) is provided with a manuscript setting portion 430, a read manuscript discharge portion 433, and a printing paper setting portion 431. Image data created by scanning a printed document can be stored/saved on a fixed disk device or a removable disk drive device as an external storage in image file format. The image file can be transmitted and received via the Internet through the communication operation by an Internet terminal function portion. The floor-installation image reading transmission/reception printer 40 comprising a printing function portion may be a next-generation multi-function complex machine with: a copying function for scanning/reading an image of a printed document and printing the created image data; a printing function for printing an image file stored/saved on an external storage provided therein; a document filing function for storing image data created by scanning/reading an image as an image file on an external storage or a removable disk drive device; a facsimile file transmission function for transmitting image data, created by scanning/reading an image, in image file format, or an image file stored/saved on an external storage via the Internet; and an image file receiving function for receiving an image file.

In copying by a conventional floor-type copier, a printed document containing, for example, a photograph other than characters may result in a copied document with low image quality, such as having a distorted image. A copied document obtained by printing image data created by scanning an image of a printed document using the floor-installation image reading transmission/reception printer 40, or an image file transmitted/received via the Internet has the same good quality as image data created by scanning an image with a conventional image scanner/reader. The floor-installation image reading transmission/reception printer 40, equipped with a communication function as an Internet terminal function, is capable of continuously reading the printed document and transmitting/receiving the read image file via the Internet according to the above described transmission/reception method.

The desktop image scanning/reading transmission/reception printer 30 and the floor-installation image reading transmission/reception printer 40, equipped with a printing function, is capable of performing printing on printing paper at the same time with reception of a file. These printers, installed in an office with a connection to the router 34 as an Internet terminal device, and provided with an AC power unit as a power section, can remain in a reception waiting state, in which power is constantly supplied, in the same manner as a conventional facsimile machine. The desktop image scanning/reading transmission/reception printer 30 and the floor-installation image reading transmission/reception printer 40, equipped with an image scanning/reading function, a printing function, or an Internet function, may be a multi-function complex machine equipped with a next generation facsimile function, a copying function, an image scanner function, a printing function for a computer, which will achieve a next generation facsimile machine or a floor-type complex machine that replaces a conventional desktop facsimile machine or a floor-type copier.

Reproduced prints obtained by printing image data created from a printed document on printing paper include a print copied by a copier, a print received by a facsimile machine, a print of image data created by taking photos with a CCD camera, and a print of image data created by reading with a flatbed scanner. In terms of the image quality, a print of image data created by scanning/reading an image of a printed document with a flatbed scanner provides better image quality among the above.

There are several methods to perform scanning/reading an image of a document and transmit the resulting image data. In reading and electronically transmitting a printed document, these methods can be divided into two methods in which degradation of image data occurs between the transmitting side and the receiving side, and without such degradation. Transmitting a document file created by word processing software in a computer and the like as an attached file to the Internet mail is a method without degradation of data. If image data created from a printed document as original is electronically transmitted, attaching an image file created by scanning/reading an image by an image scanner to the Internet mail is a method, among the aforementioned image data transmission methods, which provides a good image quality without degradation of image data between the transmitting source and the transmission destination. According to this transmission method, it is possible to receive, at the transmission destination, the same print as the one produced by connecting an image scanner/reader and a computer or a printer on a desk, creating image data by reading a printed document with the image scanner/reader, and printing with a printer connected to the computer.

By providing an image scanner/reader having a casing with a wide range of applicable size of paper to be read, even a printed document of A3 size or larger can be accepted for image reading and printing upon reception. The purpose of the image scanner/reader is not restricted to transmitting/receiving image data as an Internet terminal, but may include scanning/reading an image of a printed document and converting the image to an image file to store the image file. In the past, paper documents had been put in a file folder and stored on a book shelve. According to the desktop image scanning/reading transmission/reception printer 30 and the floor-installation image reading transmission/reception printer 40 installed in an office, it is possible to continuously read even several dozens of pages to create image files by a simple operation. Therefore, it is possible, by a simple operation, to store the image files of a printed document on a ROM disk as a storage medium, and store the image files as ROM disk files in a file folder on a book shelve. For example, several dozens of pages of paper documents put in a several-centimeter-thick document folder are placed on the manuscript setting portion 430 of the floor-installation image reading transmission/reception printer 40 for continuous reading. The created read image files are stored/saved on a ROM disk. The floor-installation image reading transmission/reception printer 40 may be provided with a removable ROM disk storage device. It is practical to put a removable disk, on which files stored/saved on a fixed disk device as an external storage are stored/saved, in a file folder and store the file folder on a book shelve. The manuscript setting portion 430 on which manuscripts to be read are set accepts manuscripts of several dozen pages, and is equipped with a continuous reading function.

When scanning is performed by the desktop image scanning/reading transmission/reception printer 30 and the floor-installation image reading transmission/reception printer 40 equipped with a continuous reading function and connected to the computer 32, 33, image file processing is available. Accordingly, it is possible to continuously read a text document and simultaneously perform text file processing of a text document image file created by scanning of all the pages of the text document by means of continuous character recognition processing using OCR (Optical Character Reader) software.

The desktop image scanning/reading transmission/reception printer 30 or the floor-installation image reading transmission/reception printer 40 equipped with an Internet terminal function is connected to the router 34 as an Internet terminal device installed in a home or an office through a cable data communication system or a wireless data communication system. The desktop image scanning/reading transmission/reception printer 30 or the floor-installation image reading transmission/reception printer 40 may be directly connected to the Internet by providing a communication function portion, such as a card-type communication device, to the main body of the image scanner/reader.

The desktop image scanning/reading transmission/reception printer 30 and the floor-installation image reading transmission/reception printer 40 may be a next-generation facsimile machine or a multi-function complex machine equipped with a next-generation facsimile function. The desktop image scanning/reading transmission/reception printer 30 and the floor-installation image reading transmission/reception printer 40, provided with an AC power unit as a power section, can remain in a reception waiting state, in which power is constantly supplied, can perform facsimile file receiving operation as a constant reception waiting state, in addition to an image scanning/reading function and a facsimile file transmitting function. At the time of reception of a facsimile file, the received facsimile file is stored/saved on the equipped external storage. The received facsimile file as image data is then printed on printing paper set on the printing paper setting portion 403, 431, and a document with printed image data of the received facsimile file is discharged from the printing paper discharge portion 407, 433. The transmission actuating operation method and the receiving operation may easily be perceived the same as transmission/reception by a conventional facsimile machine. The difference is that the image data to be transmitted/received is color image data with fine images instead of conventional black/white image data with coarse images. Another difference is that, since the received data is in an image file format, unlike a paper-printed received message by a conventional facsimile machine, the received message can easily be handled and stored, and the received data can be transferred to a forwarding address in the form of a transmission file at the transmission source.

When a document is transmitted from an office to a person in another office, one possible method is setting a file address to a transmission destination data so that the transmission is performed to a desktop computer installed on a desk of the recipient. Another possible method is a conventional facsimile transmission in which printing is performed by the receiving side at the time of reception, i.e., setting a facsimile address to a transmission destination data so that the transmission is performed to the desktop image scanning/reading transmission/reception printer 30 or the floor-installation image reading transmission/reception printer 40. Which transmission mode a transmission is to be made can be specified by the setting of the destination data at the time of transmission.

In transmission to a desktop computer disposed on a desk, a file address is set to the destination data, while in conventional facsimile file transmission/reception, a facsimile address, for transmission to the desktop image scanning/reading transmission/reception printer 30 or the floor-installation image reading transmission/reception printer 40 constantly powered and always in a reception waiting state, is set to the transmission destination data. In this manner, a facsimile file is transmitted. It is most preferable if setting of an IP telephone number assigned to the fixed IP address of an Internet terminal as destination data is available. In this case, a transmission mode setting sign may be attached to the file address, the facsimile address, or the IP telephone number as the transmission destination data so that a transmission mode can be selected from the file transmission/reception mode and the facsimile transmission/reception mode. For example, "IP telephone number + 123" indicates transmission in the file transmission mode, while "IP telephone number + ABC" indicates transmission in the facsimile file transmission mode. The transmission mode sign represented by "○○○" attached to the destination data at the time of transmission allows setting of a transmission mode and a reception mode of the transmission device and the receiving device. For example, a reception mode by the transmission mode sign is set to the desktop image scanning/reading transmission/reception printer 30 capable of reception in the facsimile mode, at the time of transmission, that the received file is only stored/saved on the external storage and is not printed at the time of reception by the receiving device. The transmission mode sign is set as an additional sign at the time of setting transmission destination data, in order to enable setting of a reception mode, such as whether or not to perform printing of image data when the image file is received by the transmission destination, at the time of transmission.

FIG. 5(a) shows a portable document reader 50 that is an image scanner/reader having a portable casing to be fitted in a business bag, and accepting up to A4 size documents. While the portable image scanner/reader 1 shown in FIG. 2 accepts only documents of notepad size, the portable document reader 50 accepts A4 size documents usually used for document paper and is also provided with a portable casing. The portable document reader 50 comprises: a manuscript setting portion 501; a manuscript discharging portion 502 that discharges a read manuscript; character/number input keys 505 to be operated for submitting transmission destination data at the time of transmission; destination data memory button switches 507 that memorize destination data in advance; a reader display 503 that displays the operation information of the reader; a reading resolution setting button switch 521; and a transmission button switch 520 that performs reading transmission actuating operation.

The aforementioned correspondence of the respective Internet terminal devices to the respective image scanners/readers to be connected is not fixed by their types such as a portable type or a desktop type. Each of the portable image scanner/reader 1, the desktop image scanning/reading transmission/reception printer 30, and the portable document reader 50 may correspond to each of the portable and desktop Internet terminal devices. FIG. 5(b) shows a ballot image scanner/reader 550 that implements a next-generation election method, i.e., a ballot collection and counting method and a ballot collection and counting system, as a specific application of the image scanner/reader. The ballot image scanner/reader 550 realizes a new election method which differs from a conventional voting method and a collection and counting method using a conventional ballot box. The ballot image scanner/reader 550 is provided with a ballot 551, a ballot insert slit 552 which corresponds to a manuscript setting opening of the aforementioned image scanner/reader, a ballot image scanner/reader operating portion, an Internet terminal device connecting portion that achieves secure connection necessary for an election, and a power section. When it is difficult to obtain a security level required for online voting performed in a state connected to the Internet, the ballot image scanner/reader 550 can be used offline at a voting station. In this case, ballots image files created by performing scanning/reading images of ballots with the ballot image scanner/reader 550 are stored/saved on a memory card or a removable fixed disk provided as an external storage. In the process of ballot counting after the conclusion of voting, the memory card or the removable disk can be removed and attached to a computer for collection and counting. Even if a trouble occurs during ballot image scanning or in ballot image files stored/saved on the external storage, it is possible to perform an image reading process to all the collected ballots in the ballot box in the ballot image scanner/reader 550 at a time. Alternatively, the votes may be counted according to a conventional counting manner.

In a conventional election, voters write down a name of their candidate on ballots and drop the ballots in ballot boxes placed in voting stations. The ballots are collected after the expiration of the voting time so that the numbers of ballots to respective candidates are counted. In case that the ballot image scanner/reader 550, as shown in FIG. 5(b), is employed as a ballot box in an election, voters write the name of their candidate on ballots and insert the ballots in the ballot image scanner/reader 550 placed in voting stations. Read ballot image files collected at voting stations in various areas are gathered to counting centers across the country in real time via the Internet. Then, a character recognition process is performed by a computer, and a counting process of counting the numbers of ballots to the respective candidates is performed. Since ballot image files are stored/saved as image files containing the names of the candidates handwritten by voters, operation errors or frauds in the counting process are not likely to occur. Rechecking, when necessary, can be performed rapidly, in a high speed by computer processing.

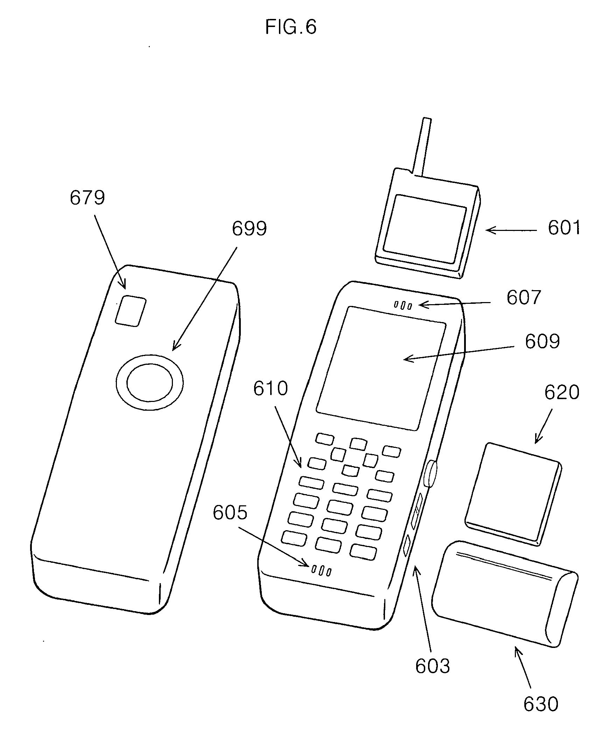

FIG. 6 is a view illustrating a telephone-shaped computer 5 as an Internet terminal device. Generally, the smaller the casing of a communication device is, the greater the portability of the device is. However, a phone as a communication device should not be too small. In order to enable a person to hold the phone and perform key operation by its operating portion or make conversation, it is preferable that the phone is as small as possible, but the casing of the phone is sufficiently large so as not to put unnecessary restrictions on functions of the phone itself. The phone should be large enough to be able to avoid unnecessary restrictions on the functions due to excessive emphasis on a small casing or to be able to supply sufficient electric energy regardless of a relatively small power section. These days, the portable computer 3 or a PDA 7 includes models with a communication function that enables conversation. However, conversation in this case by using a microphone and an earphone or a headrest is inconvenient. A communication device for human conversation is preferably configured to have a phone-shape that is easy to hold and provides a sense of stability.

The function of the telephone-shaped computer 5 shown in FIG. 6 will be described. The main body is provided with a telephone-shaped computer operating portion 610, a telephone-shaped computer display 609, a microphone 605, a receiver 607, a CCD camera 699, a photoflash 679, and a CCD camera operating portion 603. By using a communication card 601 that is an attachable/detachable communication function portion as a communication function portion performing a communication process, adaptation to an increase of the communication speed of the communication infrastructure in the communication function portion can be achieved by replacing the communication card 601 instead of replacing the main body. Also provided are a memory card storage device 620 as an external storage, a rechargeable battery 630 having the battery holder size allowing use of a dry battery as a power section, and a cable-type data communication connection terminal with a function of connecting with the above-described image scanner/reader or computer and performing data transmission/reception of, for example, address book data and mail data stored in a RAM 1005, or a file stored on an external storage 1007, and adapted to recharge the rechargeable battery 630. The data communication function portion, which may be provided with a wireless data communication function portion, includes a communication device connection terminal for connecting with a communication device to be used when driving a car.

FIG. 7 shows a flatbed reader 70 with a function of a conventional desktop flatbed scanner, but using another reading method. A conventional desktop flatbed scanner is a desktop image scanner that is connected to a computer and equipped with a function of storing image data created by scanning an image with an optical sensor on an external storage of the computer as an image file. In the reading method, a document or a book is placed with its surface to be read down on a top face reading portion of the main body placed on a desk, and the optical sensor disposed upward within the casing of the image scanner scans/reads an image of the document or the book placed with its surface down on the top face of the casing. In contrast, the flatbed reader 70 shown in FIG. 7, employs a method in which a printed document or a book is placed on a desk with its surface to be read up, the main body of the flatbed reader 70 is placed onto the surface to be read, and an optical sensor disposed downward within the casing of the flatbed reader 70 scans an image. In reading a heavy book, it is necessary to pick up the book and place the same on the flatbed scanner with its face down, and to hold the book during the entire reading. This means that reading operation is troublesome when the book is larger than the casing of the flatbed scanner. In contrast, according to the reading method in which the flatbed reader 70 is placed on a book to be read, a heavy book is placed on a desk and a reading portion 720 of the flatbed reader 70 is placed over the book for image scanning/reading, which allows easier reading operation. When reading a document, it is required to position the flatbed reader 70 squarely relative to the document to be read by, for example, placing the document on a desk pad larger than the flatbed reader 70 and with lines across the length and breadth thereof. However, it may be possible to provide the reading portion 720 having a casing larger than A4 size and scan/read an image while care is taken to place the document within a range of the reading portion 720. In this case, automatic tilt correction may be performed to image data created by scanning/reading an image. Alternatively, an upper cover attachable to the reading portion 720 may be provided such that image scanning/reading can be performed according to a reading method by a conventional flatbed scanner. As shown in FIG. 7(b), the main body of the flatbed reader is placed on a desk with its reading surface upward, and image scanning is performed according to the reading method of a conventional flatbed scanner. In the flatbed reader 70, image scanning/reading is performed while being connected to the above described Internet terminal device, such as the computer 32, 33, by cable data communication connection or wireless data communication connection.

The flatbed reader 70 shown in FIG. 7(a) is provided with character/number input keys 705 that are used to submit destination data and others, and destination data memory button switches 707 with a function of storing destination data in advance by the operation of the character/number input keys 705. Also provided are a reader display 703 that displays operation information of the flatbed reader 70, a reading resolution setting button switch 711, a transmission button switch 709 that performs transmission actuating operation, and a flatbed reader handle 701. FIG. 7(b) shows the side of the reading surface of the flatbed reader 70, and includes the reading portion 720 of the flatbed reader as the reading surface of the reader, and an attachable-detachable upper cover 723 of the reading portion.

The flatbed reader handle 701 is a handle of the main body of the reader for picking up the reader, in order to set the reading portion 720 of the flatbed reader adjusted to the face to be read of a book when reading. The configuration of the handle is such that the upper surface of the flatbed reader 70 is flat, in order to allow a weight to be placed on the flatbed reader 70 so as to prevent a gap from being created between the face to be read of the book and the reading portion 720 of the flatbed reader due to the flexure of the book when the flatbed reader 70 is placed on the book, or to allow placement with the reading portion 720 of the flatbed reader upward for use in the reading method of a conventional flatbed scanner. The main body has a casing rigidity sufficient to withstand the weight of the weight.

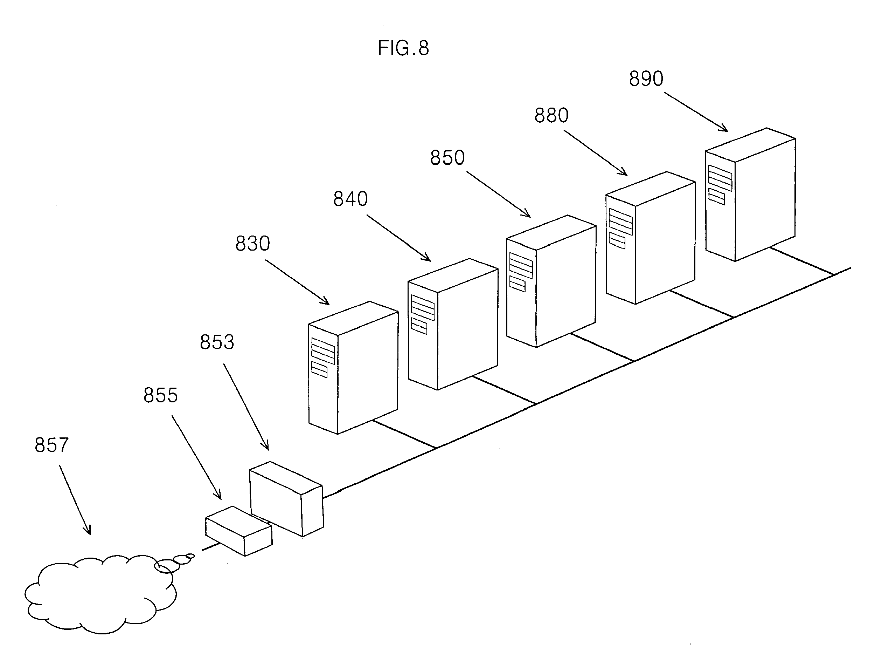

FIG. 8 shows a router and a gateway or servers to the Internet and Internet terminals, namely, the Internet 857, a router 855, a firewall 853, a file server 830 that is a server to be newly provided for the above described file transmission/reception, a facsimile server 840 to be newly provided for performing facsimile file transmission/reception in a facsimile transmission/reception mode, an FTP server 850, a WWW server 880 and a mail server 890.

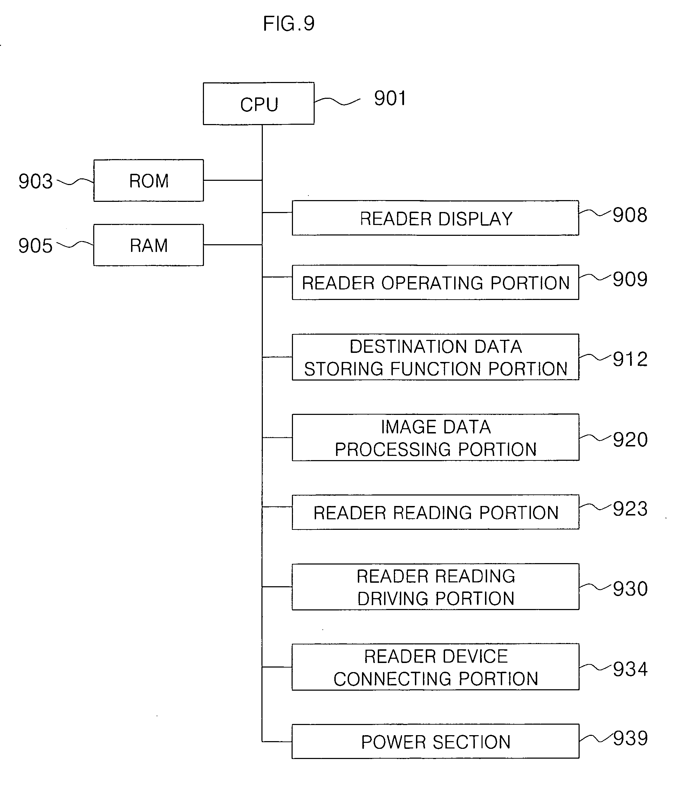

FIG. 9 is a block diagram which illustrates an image scanner/reader. The image scanner/reader comprises: a CPU 901 as a reader controller that controls the entire reader; a ROM 903 that stores control programs and others; a RAM 905 that stores data and others; a reader display 908 that displays operation information of the reader; a reader operating portion 909, including character/number input keys and transmission button switches, performs the actuating operation of the reader; a destination data storing function portion 912 that have a function of allocating destination data to the button switches; an image data processing portion 920 that performs data processing of read image data; a reader reading portion 923 equipped with an optical sensor; a reader reading driving portion 930 performing control of a paper feed roller that feeds paper during image reading/scanning; a reader device connecting portion 934 that is a connecting function portion that transmits image data to an Internet terminal function portion by cable data communication or by wireless data communication; and a power section 939 that is a rechargeable battery or an AC power unit having the battery holder size allowing use of a dry battery.

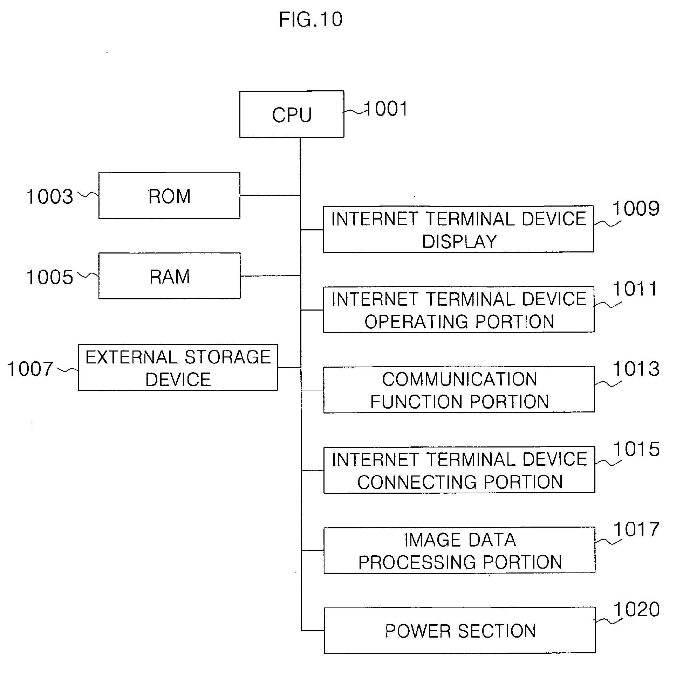

FIG. 10 is a block diagram for illustrating an Internet terminal device connected to an image scanner/reader by a method capable of data communication, or an Internet function portion equipped to the main body of the image scanner/reader. Provided are a CPU 1001 as an Internet terminal device controller that controls the entire Internet terminal device, a ROM 1003 that stores control programs and others, a RAM 1005 that stores data and others, an external storage 1007 which is a memory card storage device and a fixed disk storage device or a removable disk drive for storing/saving files, and an Internet terminal device display 1009 equipped with the function of displaying operation information of the Internet terminal device or image data display function, an Internet terminal device operating portion 1011 that is an operating portion of operating switches provided to the Internet terminal device, a communication function portion 1013 equipped with the function of connecting to the Internet, an Internet terminal device connecting portion 1015 that provides connection to the image scanner/reader by cable data communication or by wireless data communication, an image data processing portion 1017 with the function of processing image data to create an image file in a selected file format with image file size information and image reading time information or performing a file format conversion process of the image file, and a power section 1020 that is a rechargeable battery corresponding to the battery holder size allowing use of a dry battery or an AC power unit.

In order to transmit a read image file, reading actuating operation and read image file transmission actuating operation are performed by the Internet terminal device operating portion 1011, or reading operation and read image file transmitting operation are continuously performed by a reading and transmission actuating operation of the reader operating portion 909 of the image scanner/reader.

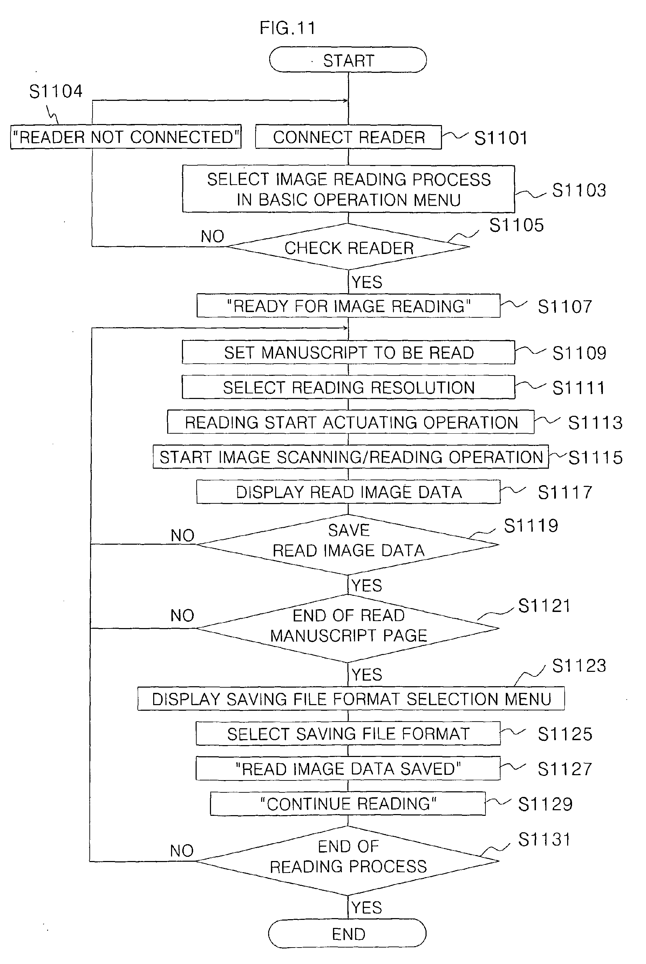

Fig. 11 shows a flowchart to illustrate a process of reading an image by the actuating operation of the Internet terminal device operating portion 1011 that is provided to the Internet terminal device connected to the image scanner/reader.

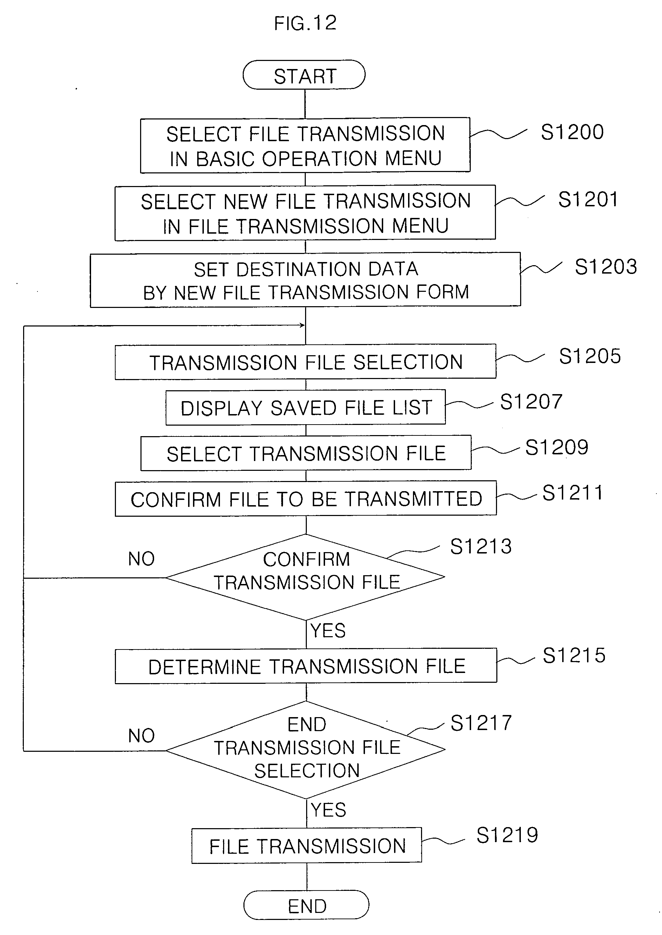

FIG. 12 shows a flowchart to illustrate a process of transmitting a file, such as an image file stored/saved on the external storage 1007 of the Internet terminal device as image data created by reading/scanning an image by the image scanner/reader, or a file loaded into a memory card inserted into the memory card storage device 1007, or a file received over the Internet and stored/saved on the external storage 1007, by the transmission actuating operation of the Internet terminal device operating portion 1011 that is provided to the Internet terminal device.

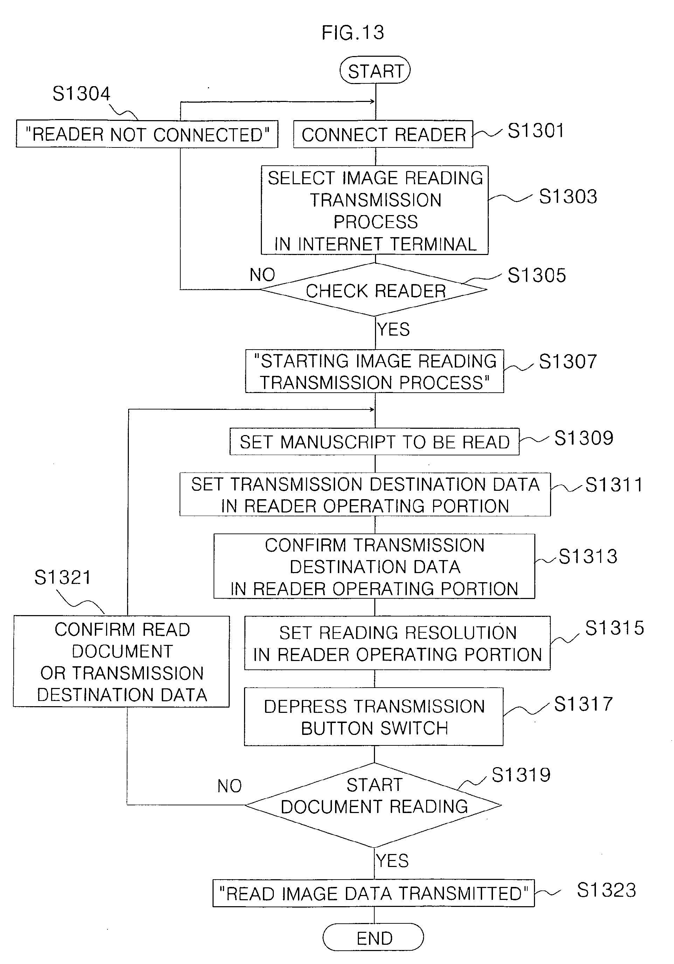

FIG. 13 shows a flowchart to illustrate the operation from the image scanning/reading operation until the completion of image file transmission by the Internet terminal device, which is the image scanning/reading actuating operation performed by the image scanner/reader operating portion 909.

The flowchart in FIG. 13 will be explained together with the block diagram of the image scanner/reader shown in FIG. 9 and the block diagram of the Internet terminal device shown in FIG. 10.

Fig. 11 shows a flowchart to illustrate the process of scanning/reading an image by the image scanner/reader connected in a manner capable of data communication, by the actuating operation of the Internet terminal device operating portion 1011 that is provided to the Internet terminal device.

In S1101, the image scanner/reader is connected to the Internet terminal device through cable data communication or wireless data communication. In S1103, image reading process is selected from a basic operation menu of the Internet terminal device in order to perform reading actuation operation. In S1105, the Internet terminal device checks the image scanner/reader. If the image scanner/reader is properly connected, a message of "ready for image reading" S1107 is indicated on the Internet terminal device display 1009. If the image scanner/reader is not properly connected due to some trouble, selection of image reading process is precluded and a message of "reader not connected" S1104 is indicated on the Internet terminal device display 1009. Then, whether the power switch of the image scanner/reader is on is checked or the connecting manner between the image scanner/reader and the Internet terminal device is checked to properly connect the image scanner/reader to the Internet terminal device for the preparation of scanning/reading an image.

In S1109, when a manuscript to be read, such as a note or a printed document to be read, is set by the reader reading portion 923 after the completion of the preparation of scanning/reading an image, the image scanner/reader automatically detects that the manuscript to be read has been set, and a roller of the reader reading driving portion 923 operates to read the margin of the manuscript to be read by several millimeters.

In S1111, the resolution for reading is previously selected from several reading resolutions provided as a basic setting in the image reading process operation menu in the basic operation menu, in accordance with the communication speed obtained in a commonly used communication environment, or with the type of the manuscript to be read, such as a note, an illustration or a photograph. The larger the image file size is, the higher the reading resolution is. If the infrastructure allowing a constant and sufficiently high communication speed by a reasonable usage fee is achieved, it may be possible to use a fixed high resolution. The reading resolution may be selectively set previously in the image reading process operation menu. In S1113, reading start actuating operation is performed with the image reading actuating menu of the Internet terminal device. In S1115, the scanning roller of the reading driving portion 930 in the image scanner/reader operates to read the manuscript and image scanning/reading by the optical sensor is started. When the image scanning/reading operation is normally completed, image data processing is performed by the image data processing portion 920 of the image scanner/reader, and then image data is transmitted to the Internet terminal device connected in a manner capable of data communication through the reader device connecting portion 934 and the Internet terminal device connecting portion 1015. In S1117, the read image data transmitted to the Internet terminal device is displayed on the equipped Internet terminal device display 1009. At one corner of the Internet terminal device display 1009, the image reading actuating operation menu, including whether the read image data currently displayed should be saved or deleted, is indicated. When saving is selected in S1119, a reading actuating operation menu message indicating whether reading of the next page of the manuscript should be performed or whether the manuscript reading should be ended is displayed in S1121. If there is another page of the manuscript to be read, the next document is set on the reader reading portion 923 and the reading process is continued in S1109. If there is no remaining page of the manuscript to be read, by selecting the end of the manuscript reading in S1121, an image file saving format selection menu S1123 to save the image data created by image reading process is displayed. In S1125, an image file saving format is selected from the file format selection menu. The image file format when saving image data may be selected from common image file formats, such as JPG file format, BMP file format, and TIF file format. It is preferable that the image file formats include an image data saving function in PDF file format, which is a document saving file format by the U.S. company, Adobe Systems, Inc., equipped with the function of combining a plurality of pieces of read image data into one file when reading a manuscript of several pages as well as a display function adapted to display the image file on the Internet terminal device display 1009. When PDF file format is selected from among the several saving file formats to save the read image data, the read image data is processed by the image data processing portion 1017 of the Internet terminal device, and is stored/saved on the external storage 1007 as a PDF file.

The file format to save read image data is preferably an image file format equipped with the function of combining read image data including several pages into one image file and a user-friendly image file display function.

When image data created by reading an image is stored/saved in a selected image file format, a message "read image data saved" is indicated on the Internet terminal device display 1009 in S1127. While the file format to save read image data is selected in the above described image file saving format selection menu S1123, the read image data is stored/saved on the external storage 1007 with a serial image file number assigned as a file name. To assign a certain image file name, a file name changing operation in the Internet terminal device basic operation menu is performed to the file stored/saved on the external storage 1007.

The image reading process of a manuscript of a printed document is now finished when the manuscript is saved as an image file. Then, a message "continue reading?" S1129 is displayed to ask whether to read the next manuscript of a printed document or to finish image reading process. If it is selected to continue image reading of another document in S1131, the process returns to S1109, and the next manuscript to be read is set on the reader reading portion 923 to continue reading. To finish reading, finish reading is selected in S1131, and reading operation is ended.

FIG. 12 shows a flowchart to illustrate the transmission actuating operation to transmit, over the Internet, an image file created by reading an image and stored/saved on the external storage 1007 of the Internet terminal device described with reference to FIG. 11, a file loaded into the Internet terminal device from a memory card, or a file received through the Internet and stored/saved on the external storage 1007.

As a file transmission/reception method performed in the Internet terminal device, transmission/reception is performed by the Internet terminal device through the file server 830, which is a newly provided file transmission/reception server, by submitting a file address newly set as destination data to be used in file transmission.

In this case, a terminal device ID of the Internet terminal device is automatically transmitted to enable the file server 830 to determine what type of Internet terminal device with an IP telephone number as a fixed IP address is connected, when the receiving Internet terminal device is started, or turned on, or the terminal device is connected to the Internet. By this, the file server may determine the receivable mode, i.e., the state of the transmission destination. The file server can determine the receiving method as a currently feasible receiving mode to the terminal device with the IP telephone number. When a file is transmitted from the transmitting side to the file server, the file server determines whether the transmitted file is a document file or an image file, and then determines whether the file is acceptable to the transmission destination. A terminal device ID may have a 32-bit length and preferably indicates data, including the type of the terminal device and the setting state of the terminal device or the state of the terminal device.

For example, when an image scanning/reading transmission/reception printer, in the form of a facsimile device, is connected to an Internet terminal device with an IP telephone number, it is possible to receive an image file that is a facsimile file and print. However, unless the receiving terminal device allows setup of application software for restoring image data from a document file created by document creating application software, even if the document file is received, reception in the facsimile mode in which printing is performed upon reception is impossible, although reception in the form of storing/saving the received file on the external storage 1007 upon reception is possible. Accordingly, transmission should be performed considering what type of terminal device is connected as the receiving device, i.e., the transmission destination, with an IP telephone number. The file server determines whether the receiving device can receive a file transmitted in the transmission mode at the time of transmission. If the receiving terminal device can receive the file, the file sever transmits the file to the receiving terminal device. If reception is impossible since the transmission mode set by the transmission destination data at the time of transmission or the file to be transmitted is different from that of the actual terminal device type of the receiving terminal device as the transmission destination, or the receiving mode of the terminal device is erroneously set, the file server indicates to the transmitter by a return message. An example of the above is the case in which the receiving terminal device with an IP telephone number as the transmission destination is a computer and cannot receive a facsimile file transmitted by the transmitter in the facsimile transmission mode, in which printing is performed upon reception by the receiving terminal device as the transmission destination.

Conventionally, an address that is the transmission destination data set at the time of data transmission/reception performed via the Internet is in the form of "user ID @ domain name" in the case of transmitting/receiving mail through a mail server. Transmission/reception is performed with destination data set in the form of a mail address of, for example, "mail address: ○○○@×××.ΔΔ.ne.jp".

When a file is transferred via an FTP server that is a file transfer server, transfer destination data is set in the form of "ftp:// domain name", such as "FTP address: ftp://× × ×.Δ Δ.ne.jp" and file transfer is performed.

Progress and improvement of the mail transmission/reception protocol and the file transfer protocol is made to develop a new file transmission/reception protocol and a facsimile file transmission/reception protocol for performing facsimile file transmission/reception.

Alternatively, the most appropriate protocol may be developed to perform file transmission/reception via a file server as a newly installed file transmission/reception server, or to perform facsimile file transmission/reception via a facsimile file server as a newly installed facsimile file transmission/reception server.

Transmission/reception of a file is performed in a file transmission/reception mode by setting a new file address as destination data for transmission, via a file server as a newly installed file transmission/reception server. Transmission/reception of a facsimile file is performed in a facsimile transmission/reception mode by setting a new facsimile address as destination data for transmission, via a facsimile file server as a newly installed facsimile file transmission/reception server.

For example, in terms of an address as transmission destination data, a file address, when transmitting/receiving a file, may be created by attaching the term of "file" to the address data, and a facsimile address, when transmitting/receiving a facsimile file as an image file, may be created by attaching the term of "fax" to the address data, such as a file address: ○○○ @file. × × × .Δ Δ .ne.jp and a facsimile address: ○○○ @fax. × × ×. Δ Δ.ne.jp. This enables identification of a file address or a facsimile address, as well as selection of transmission mode to some extent by which address is used for transmission. If the Internet terminal is given a fixed IP address, and an IP telephone number associated with the fixed IP address is set as transmission destination data, the transmission destination data is most preferable for file transmission/reception which allows file and facsimile file transmission/reception. A transmission mode sign is newly set as an option number for specifying a transmission mode to address data at the time of transmission. The destination data as the address at the time of transmission is a file address and a facsimile address or an IP telephone number. However, if transmission in a specified transmission mode is desired, it may be possible to specify the transmission mode at the time of transmission by setting the destination data with an addition of a transmission mode sign, i.e., in the form of "destination data" + "transmission mode sign".

In terms of setting methods of destination data, since the transmission destination setting data is numeric data, the destination data setting operation for transmission is easier if the IP telephone number of the Internet terminal device is used as transmission destination data to enable transmission/reception, as compared with use of a file address and a facsimile address which are character/number setting destination data. When transmission/reception is performed by setting the destination data using a file address and a facsimile address, transmission/reception may be possible at any terminal device by providing an account to the transmitting/receiving terminal device as in the case of Internet mail. A file address and a facsimile address may be easy to set and to remember, if the "file address" and the "facsimile address" are created by merely adding the terms of "file" and "fax" to a previously set mail address.

To transmit a file, a file transmission process is selected from the basic operation menu of the Internet terminal device in S1200. In S1201, file transmission/reception software for file transmission/reception, which is newly set up as if mail transmission/reception software for conventional Internet mail transmission/reception is used, is started, and a new file transmission process is selected. A new file transmission window is started which includes a destination data entry field and a transmission file name entry field as a new file transmission process form. In S1203, entry of the transmission destination data and the transmission file name is made by pointing a cursor to the transmission destination data entry field to start an address book, in which destination data is previously recorded, and selecting the transmission destination data, or by inputting the destination data with the character/number input keys of the Internet terminal device each time of transmission, like the conventional mail transmission operation method at the time of Internet mail transmission. The destination data may be a file address and a facsimile address or an IP telephone number. When necessary, an optional transmission mode sign may be additionally entered. Next, in S1205, a transmission file is selected. In S1207, a list of files stored/saved on the external storage 1007 of the Internet terminal device for selection of a transmission file is indicated on the Internet terminal device display 1009 together with a list of tree-structured folders to facilitate file selection. Alternatively, an image folder is prepared exclusively for storing image files, and stored image files are displayed in the form of thumbnail so as to facilitate file selection. If an image file is selected as a file to be transmitted in S1209, the screen of the Internet terminal device display 1009 is switched to display image data so that the transmission file is confirmed, in S1211. When the transmission file is confirmed in S1213, selection of the transmission file is determined by the selection menu indicated at the corner of the screen in S1215. One transmission file is thus selected. A plurality of files can be transmitted/received at the same time, as attached files in Internet mail transmission/reception that are transmitted/received at one time. Therefore, each time one file is selected in S1215, the selection menu is displayed at the corner of the Internet terminal device display 1009. The selection menu includes: indication of a list of all files, selection of file indication folder, switching of file indication form, and completion of selection of transmission files. In S1217, it is determined whether or not the selection of transmission files is to be continued. If another transmission file is to be selected, the process returns to the above described selection of a transmission file in S1205, and the selection of transmission files is continued. When selection of all files to be transmitted is completed, completion of selection of transmission files in the operation menu is selected. Then, the process proceeds to S1219, in which file transmission or facsimile file transmission is performed via the Internet by the transmission operation using file transmission/reception software, as in the transmission actuating operation of conventional Internet mail transmission.

The operation method of file transmission/reception using file transmission/reception software may be easily understood by imaging the conventional transmitting/receiving operation of Internet mail accompanied by an attached file.

Reading operation performed in the Internet terminal device operating portion 1011 provided to the Internet terminal device is described in FIG. 11, while transmission actuating operation performed in the Internet terminal device operating portion 1011 is described in FIG. 12. An actuating operation menu to perform image reading actuating operation and file transmission actuating operation is set in the basic operation menu of the Internet terminal device, for example, by separately setting the image reading transmission actuating operation menu to perform image reading operation through image file transmitting operation, and the image scanning/reading actuating operation menu to perform image scanning/reading actuating operation, or the file transmission actuating operation menu to perform file transmission actuating operation.

FIG. 13 shows a flowchart to illustrate the image scanning/reading transmission actuating operation performed by the image scanner/reader, which corresponds to the actuating operation performed by the reader operating portion 909 provided to the image scanner/reader, and which executes the image scanning/reading through the read image file transmission performed by the Internet terminal device.

In S1301, the image scanner/reader is connected to the Internet terminal device. In S1303, image reading transmission is selected in the basic operation menu of the Internet terminal device for performing image scanning/reading transmission actuating operation. In S1305, the Internet terminal device checks the image scanner/reader. If the image scanner/reader is properly connected, a message of "starting image reading transmission" is displayed on the Internet terminal device display 1009 in S1307. If the image scanner/reader is not properly connected due to some trouble, a message of "scanner is not connected" S1304 is displayed on the Internet terminal device display 1009. Then, the image scanner/reader will be properly connected to the Internet terminal device to prepare for image scanning/reading transmission by, for example, checking that the power switch of the image scanner/reader is ON, or the connecting method between the image scanner/reader and the Internet terminal device.

Once preparation for image scanning/reading transmission is completed by connecting the image scanner/reader, a manuscript to be transmitted, such as a note or a printed document to be read, is set by the reader reading portion 923. Then, the image scanner/reader automatically detects that the manuscript to be read has been set, and the roller portion of the reader reading driving portion 923 operates to read the margin of the manuscript to be read by several millimeters in S1309. When the manuscript to be transmitted is set and image reading is ready, transmission destination data is submitted to the reader operating portion 909 in S1311. There are the following methods of setting destination data by the scanner/reader operating portion 909. One method is to input destination data with the character/number input keys 205 each time of transmission. Another method is to read destination data stored in the destination data storing function portion 912 of the image scanner/reader and input the same. In the portable image scanner/reader 1, destination data is stored for each of the destination data storing button switches 207 by the operation of the character/number input keys 205 so as to be read by using the destination data storing button switches 207, and the destination data is read and inputted. A further method is to read address information stored in the address book which can be read in the basic operation menu of the image scanner/reader and to input the same.

In S1313, the destination data submitted by any one of the above described methods is confirmed on the reader display 908. When setting of the transmission destination data is finished, image scanning/reading resolution is selected with the reading resolution setting button switch 211 provided to the reader operating portion 909 in S1315.

When the transmission document is set, the input of transmission destination data is completed, and the image scanning/reading transmission is ready, the transmission button switch 215 of the portable image scanner/reader 1 is depressed in S1317. The paper feed roller of the reader reading driving portion 930 operates, and image scanning/reading by the optical sensor is performed on the manuscript to be transmitted set at the manuscript setting portion 201 of the portable image scanner/reader 1. Image data processing of the image data created by the image scanning is performed by the image data processing portion 920 of the image scanner/reader. Then, the image data and the transmission destination data are transmitted to the Internet terminal device through the Internet terminal device connecting portion 1015 connected to the reader device connecting portion 934. The Internet terminal device, which receives the read image data and the transmission destination data, performs image data processing at the image data processing portion 1017 to create an image file including the image data and image reading time information or image file size information. The file is saved in the external storage 1007 in the image file format for saving read image that is selected in the basic operation menu of the Internet terminal device prior to the image reading process, with a file name having a serial number of image scanning/reading. The image file is transmitted through the communication process by the communication function portion 1013 of the Internet terminal device via the Internet, according to the transmission method of setting a file address and a facsimile address or an IP telephone address inputted in the image scanner/reader to the transmission destination data, via the file server as a newly provided file transmission/reception server, or the facsimile server as a newly provided facsimile file transmission/reception server in the case of transmission in the facsimile mode. If transmission is not normally completed due to some factors during operation from image scanning/reading operation through completion of read image file transmission at the Internet terminal device, check of the manuscript to be read at the manuscript setting portion 201 or reconfirmation of the transmission destination data setting is performed in S1321. Then, the process returns to S1309 as mentioned above, in which the manuscript to be read is set, and reading transmission actuating operation is performed again.

When actuating operation from the start of image reading operation through the completion of image file transmission by the Internet terminal device is performed by the image scanner/reader, the image reading process is performed in conjunction with the image file transmission process. This image scanning/reading transmission method is, therefore, not suitable for reading and transmitting a document of multiple pages. An image file created by reading images for multiple pages by reading actuating operation performed by the Internet terminal device operating portion 1011 is once saved in the external storage 1007 of the Internet terminal device, and then transmission actuating operation of the created and stored/saved scanned/read image file is performed.

When image scanning/reading actuating operation is performed by the reader operating portion 909, image file transmission by the Internet terminal device is performed in conjunction with image scanning/reading until completion of image file transmission. Image file format for storage/saving on the external storage 1007 of the Internet terminal device after image scanning/reading is determined by previously selecting, in the basic operation menu of the Internet terminal device, the read image file saving format in the case of performing reading actuating operation by the reader operating portion 909.

If the image scanning/reading transmission process is normally completed, a message of "read image data has been transmitted" indicating normal completion of image file transmitting operation is displayed on the reader display 908 of the image scanner/reader in S1323. The image scanning/reading transmission process, in the case of performing image scanning/reading through read image file transmission by the reader operating portion 909 of the image scanner/reader, is thus ended.

In the above, the operation has been described in each of the case of image file transmission by reading actuating operation and transmission actuating operation performed by the Internet terminal device operating portion 1011, and the case of read image file transmission by the Internet terminal device performed in conjunction with the image scanning/reading performed by the reader operating portion 909 of the image scanner/reader.

In the basic operation menu of the Internet terminal device, image scanning/reading software equipped with the image reading actuating operation function for image scanning/reading actuating operation and file transmission/reception software equipped with the file management function include the actuating operation function and file transmission/reception function or the file management function. The image scanning/reading software and file transmission/reception software are created particularly for performing file and facsimile file transmission/reception in the above-described manner, like conventional mail transmission/reception software created particularly for Internet mail transmission/reception, to perform setup.

Image files created through image scanning by the image scanner/reader are all saved on the external storage 1007 of the Internet terminal device. Image file formats for saving image data may include common image file formats, such as JPG file format, BMP file format, TIF file format, and the above-mentioned PDF file format. Selection of an image file format may be performed in the selection menu when saving the image data. Alternatively, an image file format for saving image data created by image scanning/reading may be previously selected in the basic operation menu of the Internet terminal device.

The Internet terminal device is equipped with an image file format conversion function that is a function of converting the file format of image files saved on the external storage 1007 of the Internet terminal device, such as an image file received through the communication function portion 1013 and saved, an image file loaded into a memory card inserted into the memory card storage device as the external storage 1007, or an image file loaded into the external storage 1007 through the Internet terminal device connecting portion 1015.

The image file format conversion function is necessary, for example, in the case of transmission after previously converting the file format in accordance with the image file format included in the image file display function provided to the receiving Internet terminal device as the transmission destination of image file transmission, or in the case of exchanging image files among Internet terminal devices.

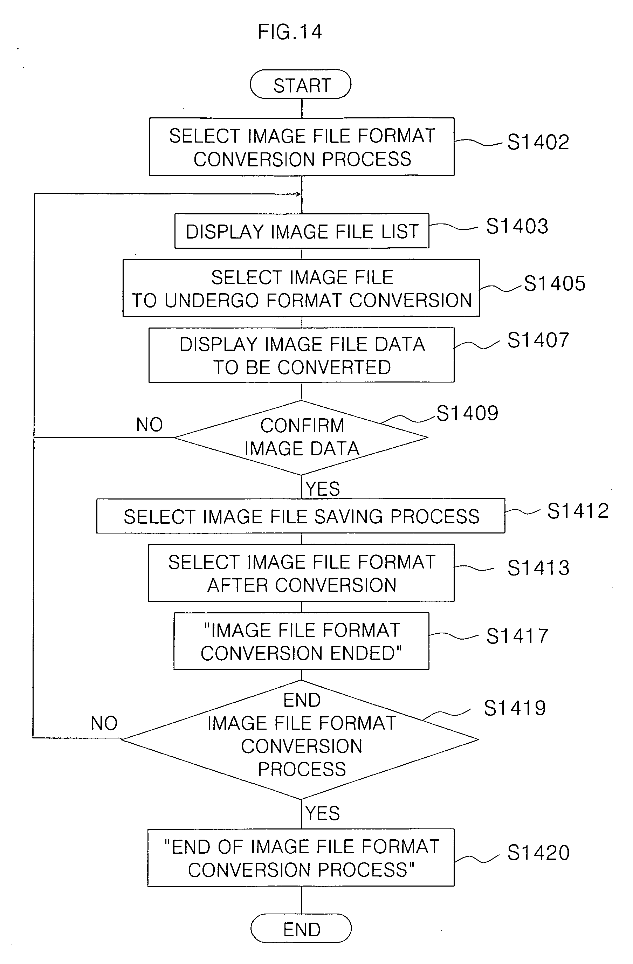

FIG. 14 shows a flowchart to illustrate an image file format conversion function that performs conversion of the file format of image files saved in the external storage 1007 of the Internet terminal device. When image file conversion is selected in the basic operation menu of the Internet terminal device in S1402, all the image files saved on the image file storage folder are displayed on the Internet terminal device display 1009 in thumbnail format such that an image file to undergo format conversion can be selected among image files saved in the external storage 1007 in S1403. When saving an image file in a portable Internet terminal device, it is preferable, in the image file saving method, that it is impossible to save an image file without specifying an image file storage folder. In S1405, an image file to undergo format conversion is selected. In S1407, image data of the selected image file is displayed on the Internet terminal device display 1009. In S1409, the image file to undergo format conversion is confirmed. If it is confirmed that the image file is properly selected, an indication of file saving operation displayed at a corner of the screen is selected in S1412. In S1413, a file format selection menu showing file formats for saving after file format conversion is shown, and a file format for saving after conversion is selected. The file format conversion is performed by the image data processing portion 1017 of the Internet terminal device, and the converted image data in the new file format may be saved in its initial place in the external storage or in a selectable another storage place. Thus, file format conversion process of one image file is ended, and a message of "image file format conversion ended" S1417 is displayed on the Internet terminal device display 1009.

When there are remaining image files to undergo file format conversion, file format conversion of the next image file is selected in a file format conversion operation menu displayed at the end of the image file format conversion of one image file in S1419. Then, the process returns to S1403, in which all the image files are displayed as above, and file format conversion of the next image file is performed. When image file format conversion is to be ended, an end of image file format conversion is selected in S1419. Then, a message of "end of image file format conversion process" is displayed on the Internet terminal device display 1009 in S1420, and image file format conversion operation is ended.

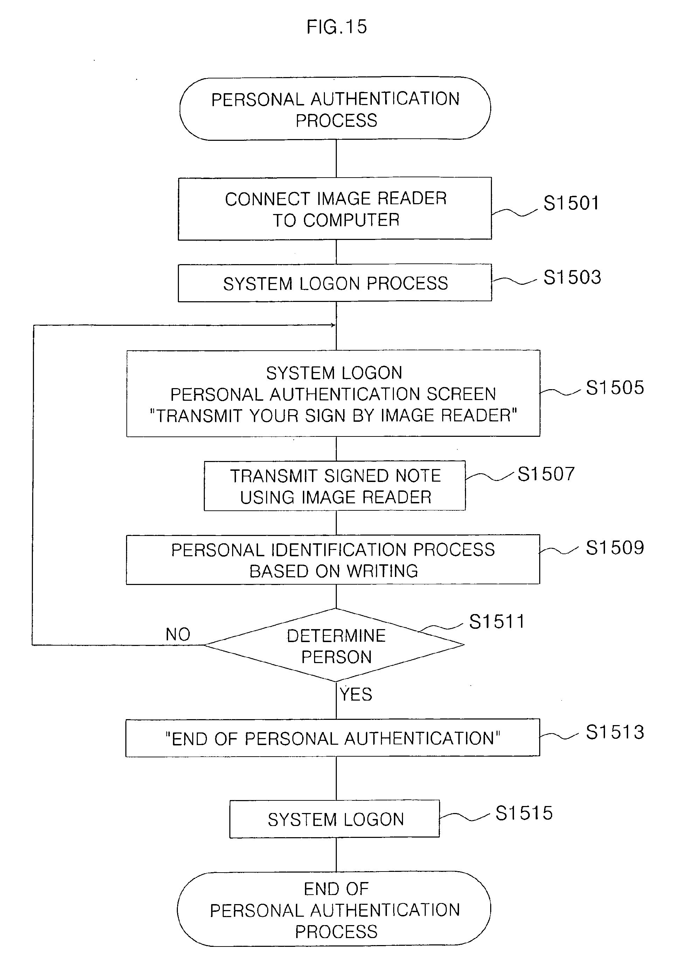

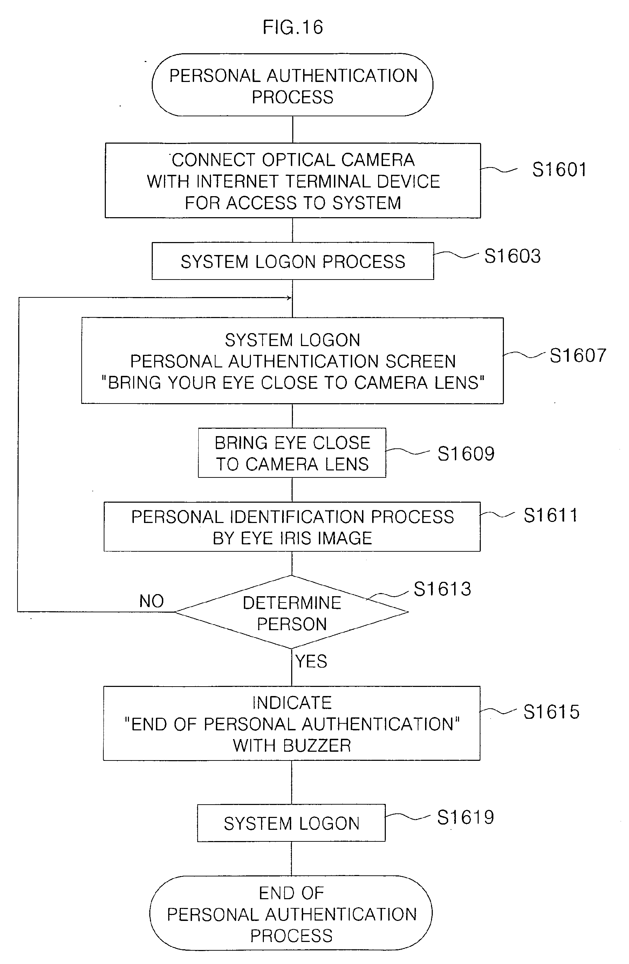

FIG. 15 and FIG. 16 are flowcharts which illustrate a new personal authentication method on the Internet. Conventionally, a personal authentication method in the form of a "user ID" and a "password" at system logon is commonly employed to access a system on the net from an Internet terminal device, for the purpose of personal authentication and security or prevention of unauthorized access. Compared with the method using a "user ID" and a "password", the personal authentication method can prevent unauthorized access more sufficiently. The personal authentication method performs personal authentication by handwriting data obtained by connecting an image scanner/reader to an Internet terminal device and transmitting a read image of a signature on a notepad, and by connecting a device provided with a CCD camera to an Internet terminal device and taking an image of an eye iris with the CCD camera.

FIG. 15 is a flowchart which illustrates a new method of personal authentication process at system logon over the Internet by using an image scanner/reader. This is a new personal authentication method in which a signature on a notepad or the like is read by an image scanner/reader as an image and the read image is transmitted, thereby enabling personal authentication by handwriting data on the system side.

The personal authentication method using an image scanner/reader is a new personal authentication method different from a conventional method using a password, which may be used for a personal authentication method at the time of logon to a system on the Internet, and for a security method at the time of operating a computer installed on a desk.

First, in S1501, an image scanner/reader such as a portable image scanner/reader 1 is connected to a computer before performing a logon process to a system on the Internet. Once preparation is completed by connecting the portable image scanner/reader 1, the process proceeds to the logon process to the system on the Internet in S1503. In S1505, a message screen of "transmit your signature by image reader" providing directions for personal authentication procedure using the portable image scanner/reader 1 as a new personal authentication method is displayed, in contrast to a conventional personal authentication screen for submitting a "user ID" and a "password" displayed at the time of logon to the system. In S1507, a person to access the system signs on a notepad or the like, and transmits a signature image file to the system via the Internet using the portable image scanner/reader 1. In S1509, personal identification by handwriting is performed on the system that has received the signature image file as image data of the signature, by determining whether or not the identical person has signed using handwriting identification software, based on handwriting data of a contractant recorded at the time of contract. In S1511, it is determined if the handwriting is identical with the contractant's through the personal identification process. If confirmed that the handwriting is the contractant's by the personal identification, a message "personal authentication complete" is indicated on the Internet terminal device display 1009 of the person to access the system in S1515. Simultaneously, the person is logged onto the system, and the process proceeds to the system main process in S1515. As previously explained, the signature image file to be transmitted includes, other than the signature image handwriting data, signature image file size information and signature image data reading time information. The information amount of the signature image file size information depends on the data amount of the signature handwriting, that is, whether the JPG file format or PDF file format is selected as the reading transmission image file format. Therefore, the signature image file is a unique file characterized as "only the person, at the time, for once". On the system side, unauthorized access, such that the person other than the contractant imitates the signature or the signature image data is stolen, can be prevented by checking whether the signature image data transmitted before is used through reference to the stored image file data.

Fig. 16 shows a flowchart diagram, which explains a method of using a CCD camera that is a new method of personal authentication at system logon through the Internet. When the logon process to the system on the Internet is performed on the telephone-shaped computer 5 including a CCD camera, the telephone-shaped computer 5 including a CCD camera is connected to an Internet terminal device, such as a computer, to prepare for a system access process in S1601. When the preparation of the system access process is ready, the system logon process is performed in S1603. A system logon personal authentication screen is displayed on the Internet terminal device display 1009, and a message "bring camera lens close to your eye" S1607 is displayed. Then, the lens portion of the CCD camera provided with the Internet terminal device or connected to the Internet terminal device which is online to the system via the Internet is brought close to the eyes in S1609. On the system side to be accessed, iris image data of the eyes created by taking a photo by the CCD camera, and the iris data of the contractant registered at the time of contract are compared to perform the personal authentication process by iris identification software which performs personal authentication in S1611. The eye iris data at the time is not static image data but iris photo moving image data with duration of several seconds. The eye iris data having information on the iris movement, photo image information due to distance variation between the lens of the CCD camera and the eyes, and photo-taking time data presents an iris photo moving image data identification method. In the next step S1613, when it is authenticated that the person is the contractant, since the person is not able to look at the display of the Internet terminal device with the eyes brought close to the lens of the CCD camera, the Internet terminal device provided with the CCD camera indicates the completion of the personal authentication process by a sound and also displays a message "personal authentication complete" on the Internet terminal device display 1009 in S1615. The person is now logged onto the system and the process proceeds to the system main process in S1619.

In the above, the method of personal authentication by using an image scanner/reader to transmit signature handwriting data, and the method of personal authentication by using a CCD camera to take a photo of iris are explained.

The respective file and data transmission/reception methods via the Internet previously explained both perform transmission/reception on the Internet. In a practical stage, it is important to enhance a security level which matches the purpose of use, that is, "being performed via the Internet", such as security measures in transmission/reception, or security measures against files on the file server and the facsimile server.

Industrial Applicability

A facsimile machine is conventionally used in transmitting/receiving a document in an office. In the facsimile transmission/reception method, a document is electronically transmitted over the phone lines by setting a facsimile-only number of a destination as destination data. An Internet terminal device is provided in which, in simple transmission/reception operation as used in a conventional facsimile machine, image data created by scanning/reading an image with an optical sensor can be transmitted/received as a facsimile file. Such a device may become a next-generation facsimile machine in a form of a desktop image scanning/reading transmission/reception printer or a floor-installation image scanning/reading transmission/reception printer.

In transmission of document paper in an office, an image scanner/reader adapted to document paper transmission is connected to a computer on a desktop. It is no longer necessary for a user to stand and move to a facsimile machine for transmitting a document, and the user can transmit a document being seated. In receiving transmitted document paper as well, the user does not have to leave the seat to get the received document at the facsimile machine, but can receive the document on the desktop computer.

The method is different from the conventionally used electronic document transmission via telephone networks which uses a facsimile machine. The method may provide a next-generation facsimile machine. An image scanner/reader and a facsimile file transmission/reception method or a facsimile file transmission/reception system is provided in which a printed document is read by an image scanner/reader, and a generated image file can be transmitted/received over the Internet in simple operation. The facsimile file transmission/reception is not limited to a facsimile machine as a specialized machine for document paper transmission/reception provided in an office or at home, as in the case of conventional transmission/reception by a facsimile machine. Connection of the portable or desktop image scanner/reader to a portable Internet terminal device and a desktop telephone having an Internet terminal function, or a computer at home and in an office enables transmission/reception. Moreover, transmitted/received message data is not reception message data as a paper document which is used by a conventional facsimile machine. The transmitted/received message data is reception message data as a computer-processable file. Therefore, handling of data by a computer is available and storage stability of the reception message data is excellent. In contrast to the conventional facsimile, the image data transmitted/received is colored and has high resolution. If an Internet terminal device is present on-site, connection of an image scanner/reader to the Internet terminal device allows reading and transmission/reception of document paper. In the case of reception, the incoming facsimile file can be received in the Internet terminal device.

As a message transmission method over the Internet, Internet mail is widely used. A user who is not used to the operation of a communication apparatus or who has seldom used the Internet mail till now because of difficulty of the operation, or even a child who has never used the Internet can transmit a handwritten message written on a notepad by using an image scanner/reader in simple transmission operation. Moreover, a recipient device of the transmission is not limited to a conventional facsimile machine which is a specialized machine for transmission/reception, but can be a portable or desktop Internet terminal device.

The document data can be carried along by storing/saving a printed document image file created by reading a printed document and a book or a name card by an image scanner/reader in an external storage device such as a portable Internet terminal device. The stored/saved printed document image file can be transmitted/received from/to a portable and desktop or floor-type Internet terminal device over the Internet in the same manner as the other files.

If a desktop image scanning/reading transmission/reception printer or a floor-installation image scanning/reading transmission/reception printer, adapted to continuous reading of document manuscripts having several pages, is used, reading operation of a document becomes simple as compared to the case of using a conventional flatbed scanner. It is possible to continuously read several dozens of pages set on a manuscript setting portion. Automatic continuous conversion from a document image file to a text file using OCR software can be performed in a connected computer. Therefore, even a paper document having several pages can be converted to a text file at a time by simple operation.

Conventional Internet mail contains a text message by keyboard input. The recipient cannot verify whether the sender is the person indicated as a sender in the mail at the time of receiving the mail. On the other hand, the message transmission method in which a handwritten message on a notepad is read and transmitted allows personal identification of the sender by the writing. Writing allows individual recognition. By using writing identification software, the recipient can identify the writer. This message transmission method can be used as a personal authentication method.

Writing data of the signature allows personal authentication. High level personal authentication becomes real which is different from the conventional personal authentication method on the net which requires input of a "user ID" and a "password". The method can be used in a system which required high security. As a new personal authentication measure instead of the conventional personal authentication method by the user ID and password at system logon on the net, a signed notepad is read by an image scanner/reader to create a signature image file to be transmitted within a few minutes. The recipient system determines personal identification of the received signature image data by means of writing data identification software. In combination of the signature image reading time information and the signature image file size information at the time of transmission, the present method becomes a unique personal authentication method which may stand for "only the person, at the time, for once". The method may be used for personal authentication at the time of logon to a system online or offline.

In the medical scenes, medical records stored in binders may be read by an image scanner/reader and filed as computer-readable image files.

When office processing in every industry where every movement has been managed by document files is transferred to computer processing, document files stored in paper-based files will be converted to computer-readable files. The image scanner/reader of the present invention can be used to scan/read the conventionally paper-based documents such as the document papers, payment slips, item cards, drawings and ledgers, and convert them into image files.

Handwriting text is different from text typed by a keyboard of a computer. Handwriting not only prevents anonymity and impersonation on the net, but also has psychological effects on preventing unauthorized access since the writing image data is retained at the recipient. The writing image data may be used for personal authentication at future tallying on the Internet. The use is not limited to the personal identification at the time of reading and transmitting document paper. Specifically in the countries and regions where a signature is used for personal identification, a range of use is wide and the method has a number of potentialities. Particularly, ballot image scanners/readers are installed at voting stations at the time of election. Voters write down the name of a candidate on a ballot and post the ballot not to a ballot box, but to an opening for setting a manuscript of the ballot image scanner/reader. Instead of conventional collection after the voting, an image file is generated at the time of posting of the ballot to the ballot image scanner/reader. The image file data is collected offline or online and the candidates' names are recognized by an automatic name reading recognition process, thus achieving collection and counting of the ballots. The ballot image files are stored/saved on an external storage apparatus of the ballot image scanner/reader as ballot image data. Therefore, reviewing and recounting become easy. Corruption hardly occurs in elections.

The image scanning/reading transmission/reception printer can be a next-generation facsimile device and facsimile transmission/reception method or facsimile transmission/reception system. Unlike the conventional facsimile machine, the image scanning/reading transmission/reception printer leads to development and vitalization of phone companies, computer manufacturing companies, and facsimile manufacturing companies, as a new facsimile transmission/reception system using the Internet.

## Claims

1. An image scanning/reading transmitter/receiver and a file transmission/reception method over the Internet or a file transmission/reception system, in which, with an image scanner/reader provided with an image scanning/reading function using an optical sensor (CCD: charge-coupled device), image data created by scanning/reading a printed document can be transmitted/received over the Internet to an Internet terminal device which is a transmission destination, by setting address newly set in an image file format through a transmission/reception process performed in an Internet terminal function provided to a main body of the image scanner/reader or connected to the image scanner/reader.

2. An image scanning/reading transmission/reception printer considered to be a next-generation facsimile machine in which, with an image scanner/reader having an image scanning/reading function and a printing function, image data created by scanning/reading a printed document can be transmitted/received over the Internet as an image file to an Internet terminal device as a transmission destination by an Internet terminal function provided to a main body of the image scanner/reader or connected to the image scanner/reader. When the image file is received by the recipient Internet terminal, the received image file is printed by the installed printing function.

3. The image scanning/reading transmitter/receiver according to claim 1 comprising an image reading transmission unit, wherein the image scanning/reading transmitter/receiver is an image scanner/reader connected to the Internet terminal device so as to enable data communication, and, by simple operation of an image scanning/reading operating portion, enables a transmission actuating operation from storage/saving of image data created by scanning/reading a printed document in image format to an external storage device provided to the Internet terminal device, until transmission of the image file created by image scanning/reading over the Internet by the Internet terminal function.

4. The image scanning/reading transmission/reception printer according to claim 2, which is a desktop image scanner/reader comprising a desktop casing and capable of reading a manuscript in the size of A4 or A3, which are commonly-used document sizes, wherein image scanning/reading transmission/reception printer is a desktop image scanning/reading transmission/reception printer comprising a communication function as an Internet terminal device and an image data printing function that performs a printing process upon reception of an image file, and is considered to be a next-generation facsimile device which is connected to a router which is an Internet terminal device installed in an office or a home by cable data communication or wireless data communication for Internet connection.

5. The image scanning/reading transmission/reception printer according to claim 2, which is a floor-installation image scanning/reading transmission/reception printer comprising a floor-installation casing and capable of reading a manuscript in the size of A4 or A3, which are commonly-used document sizes, and is considered to be a next-generation facsimile device comprising an image scanning function and an Internet terminal function or a printing function which performs a printing process upon reception of an image file.

6. The floor-installation image scanning/reading transmission/reception printer according to claim 5, comprising a fixed disk storage device and a memory card storage device which are external storage devices provided to the image scanner/reader, and a removable disk storage device using a CD-ROM, CD-RAM, DVD-ROM, DVD-RAM, or next-generation removable disk, as a storage medium.

7. A telephone-shaped Internet terminal device which is a computer having a shape of a portable telephone, comprising a telephone-shaped casing, and which is an Internet terminal device that uses a detachable Internet communication card as a communication function portion.

8. The image scanning/reading transmitter/receiver according to claim 1, which is a portable image scanner/reader used connected to an Internet device having a small-sized portable casing and capable of reading a manuscript up to the size of a notepad.

9. The image scanning/reading transmitter/receiver according to claim 1, which is a portable image scanner/reader used connected to an Internet device having a portable casing that is so small as to be fitted in a business bag and capable of scanning/reading a manuscript up to the size of A4 which is a commonly used document size.

10. The image scanning/reading transmitter/receiver according to claim 1, which is a portable image scanner/reader suitable for scanning/reading books, bound documents, or printed documents of size larger than A4 size and of shape difficult to pass through a manuscript setting portion of the image scanner/reader for image scanning/reading, and which is a flatbed image scanner/reader comprising a casing which, as a mode of reading, allows a manuscript to be read to be placed on a desk with a reading face upward, and the image scanner/reader to be placed on an object to be read so that a bottom face of the image scanner/reader is scanned/read.

11. The file transmission/reception method or file transmission/reception system according to claim 1, which is a file transmission/reception method over the Internet, in which a file is transmitted/received over the Internet via a file server which is a newly installed file transmission/reception server, by setting a file address newly set as destination data in transmission or an IP telephone number to transmission destination data.

12. The facsimile file transmission/reception method or facsimile file transmission/reception system according to claim 1, which is a facsimile file transmission/reception method over the Internet, in which a facsimile file is transmitted/received over the Internet via a facsimile file server which is a newly installed facsimile file transmission/reception server, by setting a facsimile address newly set as transmission destination data when an image file created by the scanning/reading with the image scanner/reader is transmitted/received, or an IP telephone number, to transmission destination data.

13. The file transmission/reception method and file transmission/reception system or facsimile file transmission/reception method and facsimile file transmission/reception system according to claim 1, wherein a file and a facsimile file can be transmitted/received by setting an IP telephone number of a recipient Internet terminal device as transmission destination data in file transmission/reception and facsimile file transmission/reception, and wherein a transmission mode can be set by adding, to destination data, a transmission mode sign, which is a setting sign for enabling setting and transmission in the transmission mode by being added to the IP telephone number which is transmission destination data.

14. The image scanning/reading transmitter/receiver according to claim 1, comprising a destination data storage function which includes destination data storage button switches provided to the image scanner/reader and which is a function of allocating one transmission address or IP telephone number which is destination data to one destination data storage button switch by operation of character/number input keys.

15. The image scanning/reading transmitter/receiver according to claim 1, wherein, through operation performed by an image scanner/reader operating portion of the image scanning/reading transmitter/receiver connected to the Internet terminal so as to enable data communication, image scanning/reading transmitting actuating operation from image scanning/reading operation till completion of image file transmission by the Internet terminal device performed over the Internet is enabled, and in terms of an image file transmitting operation method, in simple transmitting operation which includes setting a transmission manuscript to the image scanner/reader, input of destination data, and depression of a transmission button switch, the image file is transmitted over the Internet through an image file transmission process performed in a communication function portion provided to the Internet terminal device in conjunction with creation of the image data by image scanning/reading. Image reading transmission actuating operation from the start of image scanning/reading till the completion of the image file transmission is enabled in transmission operation which is easy for everybody to perform at a reader operating portion provided to the image scanner/reader.

16. The Internet terminal device according to claim 1, wherein an image file created by scanning/reading with an image scanner/reader can be stored/saved in common image file format such as JPG file format, BMP file format, and TIF file format as the image file format for storage/saving to an external storage device provided to the Internet terminal device, and the Internet device comprises a function of storing image data in PDF file format which is a document storage file format by a U.S. company, Adobe Systems Incorporated or in an image file format which allows image data including several pages collected into one cohesive image file.

17. The Internet terminal device according to claim 1, comprising an image file converting function in which a file format, of an image file stored/saved on an external storage device provided to the Internet terminal device, such as JPG file format, BMP file format, TIF file format, and PDF file format, is mutually converted to each other's file format.

18. The Internet terminal device according to claim 1, wherein the Internet terminal device is provided with an Internet terminal device display portion having an image file data display function, and further comprises a scaling display function for scaling up and down an image displayed on the Internet terminal device display portion, and a scrolling display function for scrolling the displayed image in vertical and lateral directions.

19. A personal authentication method using the image scanning/reading transmitter/receiver according to claim 1, wherein a signature image file created from a signed notepad is transmitted to a system on the Internet using an image scanning/reading transmitter/receiver over the Internet. A personal authentication process is performed in the system receiving the signature image file through a writing identification process by comparing the signature image file with signature writing data which has been registered in advance when a person who accesses the system has signed a contract.

20. A personal authentication method by signature image data, which is enabled on the Internet with the image scanning/reading transmitter/receiver according to claim 1, wherein, with an image scanner/reader connected to an Internet terminal device, a manuscript of a signed notepad is scanned/read to be transmitted from the Internet terminal device to the system via the Internet as a signature image file which is a collection of signature image data and signature image file size information or signature image reading time information, and a unique personal authentication method and security method **characterized** as "only the person, at the time, for once" is enabled through determination by the system receiving the signature image file, of writing data of the signature image file.

21. A personal authentication method in which personal authentication is performed by comparing an iris of an eye captured by a camera with an optical sensor and an iris pattern of an identical person stored/saved in advance. A personal authentication method by iris moving image data captured by a camera provided with an optical sensor, wherein the personal authentication method is an iris moving image data identification method in which the iris image data at the time is not static image data but image iris moving image data with duration of several seconds and includes information on iris movement during photography or photo image information due to change of distance between a lens of the optical camera and the eye, together with photo time data.

22. A ballot image scanner/reader which is an image scanner/reader installed at a voting station at an election, in which a ballot image file is created by scanning/reading a ballot on which a name of a candidate is written, and ballot collection and counting is enabled applying a name recognition software to ballot image data.

23. A voting method in which a ballot image scanner/reader is installed at a voting station at an election and voters write down a name of a candidate on a ballot to post the ballot to a ballot setting opening of the ballot image scanner/reader, and a ballot collection and counting method and a ballot collection and counting system, in which a ballot collection and counting unit is enabled which is a function of counting votes by a name identification unit applying a name recognition software to candidates written on ballots.

24. A voting method and a ballot collection and counting method, in which a ballot image scanner/reader comprising an Internet terminal function is installed at a voting station and connected to a voting collection and counting system via the Internet preliminarily to an election. Scanning/reading of images of ballots posted to a ballot posting opening of a ballot image scanner/reader on which a name of a candidate is written on a voting date is performed, and voting image files are created to be transmitted as needed to the ballot connection and counting system on the Internet one by one in real time. A voting method and ballot collection and counting method and a ballot collection and counting system using a ballot image scanner/reader, in which on the ballot collection and counting system that collects the ballot image files via the Internet comprises a ballot counting unit that counts and sums up votes to candidates from ballot image files using a writing recognition software.

25. The image scanner/reader according to claim 1, wherein a manuscript setting portion of a desktop image scanning/reading transmission/reception printer and a floor-installation image scanner/reader comprises a continuous reading function that allows reading of a manuscript having a several dozens of pages. And, the image scanning/reading transmitter/receiver according to claim 1, which is adapted to continuous reading of plural number of pages, for storing/saving image data including a several number of pages created by image scanning/reading as one collective file in PDF format to an external storage device of a connected computer, and, when a read document manuscript is a text document, enabling a text document filing function, to a read document image file including a several number of pages, provided to the computer connected to the desktop image scanning/reading transmission/reception printer and floor-installation image scanner/reader by an OCR (Optical Character Reader) software.

26. The Internet terminal device according to claim 1, comprising an Internet terminal device ID notification function which, in order that a file server or facsimile server can recognize the terminal ID which indicates a type and a setting condition or a state of the Internet terminal device having a fixed IP address, automatically transmits the terminal device ID to the server.

27. The image scanning/reading transmitter/receiver according to claim 1 and the Internet terminal device connected to the image scanning/reading transmitter/receiver so as to enable data communication, wherein image data created by image scanning/reading by the image scanner/reader is stored/saved in an image file format previously selected from some image file formats provided for selection in storage/saving to an external storage device of the Internet terminal device, and wherein reading transmitting actuating operation corresponding to operation from image scanning/reading to completion of the read image file transmission by the Internet terminal device is enabled at an image scanning/reading operating portion or an Internet terminal device operating portion.

28. A file transmission/reception software that is installed on an Internet terminal device and comprising a file transmission/reception function and a facsimile file transmission/reception function or a file management function wherein the software is specialized in the file transmission/reception function and the transmission/reception file management function.
